(19) Europäisches Patentamt
European Patent Office
Office européen des brevets

(11) **EP 2 163 944 B1**

(12) **EUROPEAN PATENT SPECIFICATION**

(45) Date of publication and mention
of the grant of the patent:
**19.06.2013   Bulletin 2013/25**

(51) Int Cl.:
***G02F 1/167*** *(2006.01)*      *G02F 1/1345* *(2006.01)*

(21) Application number: **08765776.3**

(86) International application number:
**PCT/JP2008/061356**

(22) Date of filing: **20.06.2008**

(87) International publication number:
**WO 2008/156175 (24.12.2008 Gazette 2008/52)**

(54) **INFORMATION DISPLAY PANEL**

INFORMATIONSANZEIGETAFEL

PANNEAU D'AFFICHAGE D'INFORMATIONS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.06.2007   JP 2007162781**
**15.08.2007   JP 2007211628**
**30.10.2007   JP 2007282258**

(43) Date of publication of application:
**17.03.2010   Bulletin 2010/11**

(73) Proprietor: **Bridgestone Corporation**
**Tokyo 104-8340 (JP)**

(72) Inventors:
• **SAKURAI, Ryo**
**Kodaira-shi**
**Tokyo 187-8531 (JP)**
• **OHNO, Shingo**
**Kodaira-shi**
**Tokyo 187-8531 (JP)**
• **NISHIDA, Mitsuhiro**
**Kodaira-shi**
**Tokyo 187-8531 (JP)**
• **TANAKA, Kanji**
**Kodaira-shi**
**Tokyo 187-8531 (JP)**
• **NISHII, Masayuki**
**Kodaira-shi**
**Tokyo 187-8531 (JP)**

(74) Representative: **Waldren, Robin Michael et al**
**Marks & Clerk LLP**
**90 Long Acre**
**London**
**WC2E 9RA (GB)**

(56) References cited:
JP-A- 2004 109 681      JP-A- 2005 208 493
JP-A- 2007 316 345      US-A- 6 118 081
US-A1- 2002 145 697     US-A1- 2005 122 306
US-B1- 6 265 986        US-B1- 6 601 947
US-B1- 6 628 257

## Description

TECHNICAL FIELD

The present invention relates to information display panels for rewriting and displaying information such as images by electrically connecting a display unit to a drive circuit substrate, relates particularly to information display panel with the display unit constituted to be removable from an attaching/detaching mechanism provided on the drive circuit substrate.

RELATED ART

Proposed as an information display device substitutable for liquid crystal display (LCD) have been information display devices with the use of technology such as a charged particle move-in-the-air method (an electronic powder liquid method (registered trademark No. 4636931)), a charged particle move-in-liquid method (an electrophoresis method), an electro-chromic method, a thermal method, dichroic-particles-rotary method, and the likes.

As for these information display devices, it is conceivable, as compared with LCD, as inexpensive visual display device of the next generation from a merit having wide field of vision close to normal printed matter, having smaller consumption, or having a memory function, and spreading out to a display for portable device and an electronic paper is expected.

Among the above methods, the charged particle moving methods are highly expected to be used as the electronic paper because of its excellent display memory property. As the information display panel of the charged particle moving method, there is an information display panel (for example, see a brochure of WO2005/062112) which displays information such as an image on the display unit by sealing display medium, composed of a particle assemblage including particles having optical reflectance and electrification characteristic, into a space between two substrates, at least one of which is transparent, and imparting an electric field to the display media so as to move the display medium.

Since the information display panel stated above having the display memory property is capable of maintaining displayed information even after a power source is turned off, it is possible to remove the information display panel from the power source after rewriting displayed information. However, since the information display panels which have been suggested so far have an integral constitution of a display unit 104 (panel having an information display area 102), a drive circuit substrate 103 and an actuation driver 101, it is not possible to move the display unit 104 displaying information (displayed information image, in other words) separately. In addition, it is inevitable to mount an expensive IC on the actuation driver of the information display panel, and since the conventional information display panel has the substrate of the display unit with the actuation driver mounted thereby, for example, a TCP (Tape Career Package) method or the actuation driver directly mounted thereon by methods such as COG (Chip on Glass) method or COF (Chip on Film) method, it has been unavoidable to discard the expensive IC, in a case where the display unit for displaying information such as an image is deteriorated or has a failure. Thus, it does not enable reuse of the actuation driver and the drive circuit substrate having the expensive IC mounted thereon, which has thereby been causing waste. Attention is drawn to the disclosures of US 6,628,257, on which the preamble of claim 1 is based, as well as to the disclosure of US 2005/122306, US 6,601,947, US 2002/145697, and US 6,118,081.

DISCLOSURE OF THE INVENTION

A first object of the present invention is to provide a display unit having a display memory property which is constituted to be detachable from an attaching/detaching mechanism provided on a drive circuit substrate, such that the display unit is attached to the attaching/detaching mechanism of the drive circuit substrate for rewrite of display information and, after rewrite of display information, detached from the attaching/detaching mechanism of the drive circuit substrate, so as to be moved to elsewhere while maintaining information displayed on the display unit.

A second object of the present invention is to provide the display unit which is constituted to be replaceable without discarding an actuation driver having an expensive IC mounted thereon, in a case where the display unit for displaying information such as an image has a failure, so as to improve resource use efficiency by reusing the actuation driver having the expensive IC mounted thereon or the drive circuit substrate.

In order to achieve the above first object, an information display panel of the present invention is provided according to claim 1.

In a preferred embodiment of the information display panel according to the present invention to achieve the above first object, the actuation driver is mounted to the display unit.

In order to achieve the above second object, an information display panel of the present invention is provided, according to claim 1.

As a preferred embodiment of the information display panel according to the present invention to achieve the above second object, the actuation driver is mounted to the drive circuit substrate.

Moreover, preferred embodiments of the information display panels common in order to achieve both of the first and the second objects stated above, are: the connector is provided at a periphery of the display unit and the attaching/detaching mechanism is constituted of a support and connection member of a press-fit method, for electrically connecting and supporting between the connector provided at the periphery of the display unit and a drive circuit terminal disposed on the drive circuit substrate, which mechanically presses the connector to fit to the drive circuit terminal when the display unit is mounted, while releasing the connector from the drive circuit terminal when the display unit is detached; the connector is provided at the periphery of the display unit and the attaching/detaching mechanism is constituted of a support and connection member of an insert-and-remove method, for electrically connecting and supporting between the connector provided at the periphery of the display unit and the drive circuit terminal disposed on the drive circuit substrate, which mechanically inserts the connector into the drive circuit terminal when the display is mounted, while pulling out and releasing the connector from the drive circuit terminal when the display is demounted; the connector, provided at the periphery of the display unit and attached to the attaching/detaching mechanism of the drive circuit substrate, has a thickness between 0.07 mm and 1.0 mm; and a connection electrode, disposed on the connector provided at the periphery of the display unit, has a thickness between 10 nm and 50 $\mu$m.

Furthermore, preferred embodiments of the information display unit in accordance of the present invention are: the connection electrode for connecting to the drive circuit at the connection terminal unit of the double-sided attach constitution, has an electrode area which is double the electrode area of the connection electrode of a one-sided constitution; the connection electrode, for connecting to the drive circuit at the connection terminal unit of the double-sided attach constitution, has the electrode area of the same size as that at the connection terminal unit of the one-sided constitution but the connection terminal unit is half the size of that of the one-sided mount constitution; an anisotropically conductive film (ACF) is disposed between the end portion of the display unit having the extraction electrode unit and the connection electrode for connecting to the drive circuit provided on the connection substrate serving as the connector of the display unit, so as to connect the end portion of the display unit having the extraction electrode unit and the connection electrode for connecting to the drive circuit provided on the connection substrate, as well as to obtain an electrical continuity between the extraction electrode and the connection electrode for connecting to the drive circuit; the connection substrate serving as the connector of the display unit is a polyimide resin substrate or a glass fiber reinforced epoxy resin substrate; the connection electrode, for connecting to the drive circuit provided on the connection substrate serving as the connector of the display unit, is a metallic electrode; the metallic electrode is formed of copper plating film or copper foil; the display unit having the display memory property is constituted of two substrate, at least one of which is transparent, and display medium sealed into a space therebetween and displays information such as an image in the display area by electrically controlling and activating the display medium; and the display medium having the display memory property is constituted of a particle assemblage containing particles having at least optical reflectance and electrification characteristic.

According to the information display panel of the present invention stated above, for rewriting and displaying information such as an image by electrically connecting the display unit having the display memory property to the drive circuit substrate, since the display unit has the connector electrically connected to the electrode disposed in the display area and is constituted to be detachable via the connector from the attaching/detaching mechanism provided on the drive circuit substrate and the display unit is mounted on the mounting mechanism for connecting to the drive circuit, it is possible that the display unit is attached to the attaching/detaching mechanism of the drive circuit substrate for rewrite of display information and detached from the attaching/detaching mechanism of the drive circuit substrate after rewrite such that the display unit is moved to elsewhere while maintaining information displayed on the display unit. In addition, in a case where the display unit for displaying information such as an image causes a failure, it is possible to replace the display unit without discarding the drive circuit substrate, which thereby achieves improvement of resource use efficiency by reusing the drive circuit substrate.

Moreover, according to the information display panel of the present invention stated above, for rewriting and displaying information such as an image by electrically connecting the display unit having the display memory property to the drive circuit substrate, since the display unit has the connector which is electrically connected to the electrode disposed in the display area and is constituted to be detachable from the attaching/detaching mechanism provided on the drive circuit substrate, and the display unit is attached to the attaching/detaching mechanism for connecting to the drive circuit and also the actuation driver is mounted on the driver circuit substrate, in a case where the display unit for displaying information such as an image causes a failure, it is possible to replace the display unit without discarding the actuation driver having the expensive IC mounted thereon. Accordingly, it achieves improvement of resource use efficiency by reusing the actuation driver having the expensive IC mounted thereon.

BRIEF DESCRIPTION OF THE DRAWINGS

[Fig. 1] Figs. 1a and 1b are diagrams illustrating a principle construction of a panel of a charged particle moving method, which is an example used for a display unit of an information display panel according to the present invention;
[Fig. 2] Figs. 2a and 2b are diagrams illustrating a principle construction of the display unit of the information display panel according to the present invention;

[Fig. 3] Figs. 3a and 3b are diagrams illustrating the principle construction of the panel of the charged particle moving method, which is the example used for the display unit of the information display panel according to the present invention;

[Fig. 4] Figs. 4a and 4b are diagrams illustrating the principle construction of the panel of the charged particle moving method, which is the example used for the display unit of the information display panel according to the present invention;

[Fig. 5] Figs. 5 is a diagram illustrating a principle construction of a panel of an electrophoresis method, which is another example used for the display unit of the information display panel according to the present invention;

[Fig. 6] Figs. 6 is a diagram illustrating the principle construction of the panel of the electrophoresis method, which is another example used for the display unit of the information display panel according to the present invention;

[Fig. 7] Figs. 7a - 7c are diagrams respectively illustrating still another example using cholesteric liquid crystal for the display unit of the information display unit according to the present invention;

[Fig. 8] Fig. 8 is a diagram illustrating still another example using a redox-based pigment for the display unit of the information display unit according to the present invention;

[Fig. 9] Fig. 9a is a diagram illustrating an exemplified configuration of the information display panel according to the present invention, Fig.9b is a detailed diagram illustrating a lateral view of a section A in the Fig.9a when the section A is detached and attached, and Fig.9c is a detailed diagram illustrating the lateral view of the section A in the Fig.9a when the section A is connected;

[Fig. 10] Fig. 10a is a diagram illustrating an exemplified configuration of the information display panel according to the present invention, Fig.10b is a detailed diagram illustrating a lateral view of a section A in the Fig.10a when the section A is detached and attached, and Fig.10c is a detailed diagram illustrating the lateral view of the section A in the Fig.10a when the section A is connected;

[Fig. 11] Figs. 11 a and 11b are diagrams respectively explaining an example of a first character of the display unit and a connector constituting the information display panel according to the present invention;

[Fig. 12] Figs. 12a - 12c are diagrams respectively explaining another example of the first character of the display unit and the connector constituting the information display panel according to the present invention;

[Fig. 13] Figs. 13a - 13c are diagrams respectively explaining an example of a second character of the display unit and the connector constituting the information display panel according to the present invention;

[Fig. 14] Figs. 14a - 14c are diagrams respectively explaining another example of the second character of the display unit and the connector constituting the information display panel according to the present invention;

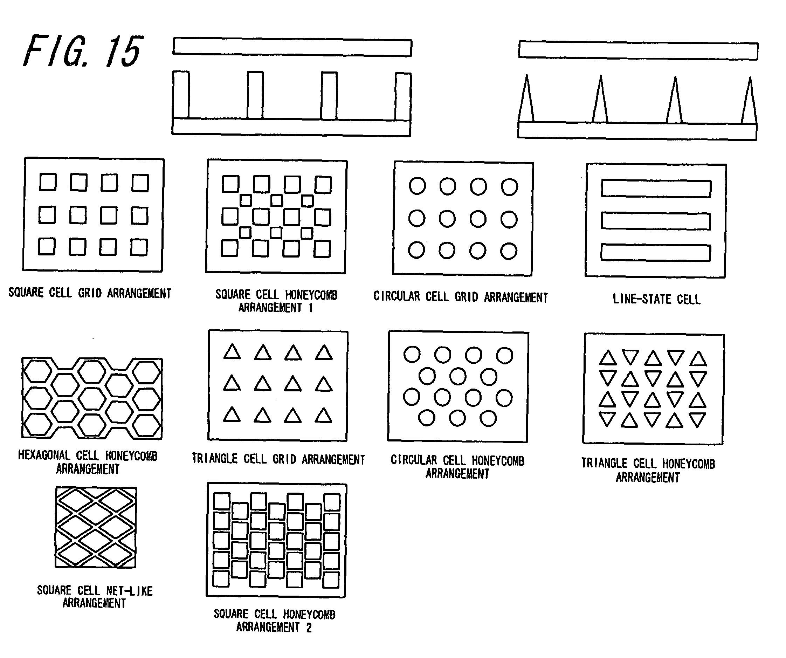

[Fig. 15] Fig. 15 is a diagram exemplifying forms of partition walls at a display area of the display unit of the information display panel according to the present invention;

[Fig. 16] Figs. 16a and 16b are diagrams illustrating a constitution of the information display panel according to a first embodiment of the present invention;

[Fig. 17] Figs. 17a and 17b are diagrams illustrating a constitution of the information display panel according to a second embodiment of the present invention;

[Fig. 18] Figs. 18a and 18b are diagrams illustrating a constitution of the information display panel according to a third embodiment of the present invention;

[Fig. 19] Figs. 19a and 19b are diagrams illustrating a constitution of the information display panel according to a fourth embodiment of the present invention;

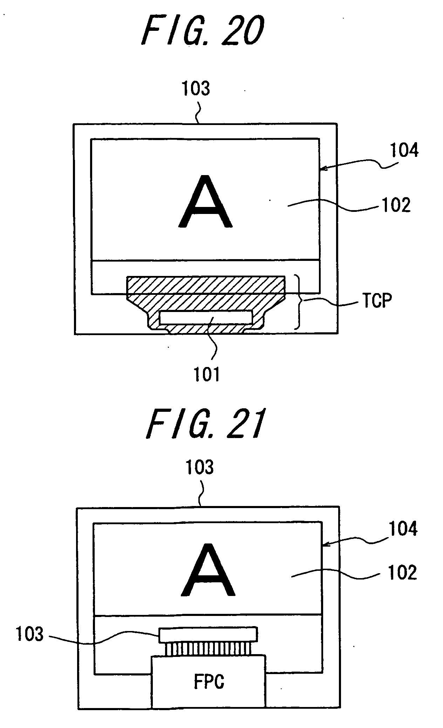

[Fig. 20] Fig. 20 is a diagram explaining an example of a conventional information display panel; and

[Fig. 21] Fig. 21 is a diagram explaining another example of a conventional information display panel.

## BEST MODE FOR CARRYING OUT THE INVENTION

Hereinafter, the best mode for carrying out the present invention will be explained in detail with reference to the drawings.

Explained at first is a display unit of a charged particle moving method having a display memory property of a charged particle moving method as a configuration of the display unit of an information display panel according to the present invention. In the display unit, a display medium (charged particles) sealed in a space between two opposed substrates is imparted with an electric field. Along a direction of the electrostatic field by means of the force of the electrostatic field, Coulomb's force or the like, the charged display media are attracted and moved by varying a direction of electrostatic field. Accordingly, information such as an image or the like can be displayed. Therefore, it is necessary to design the information display panel in such a manner that the display media can move uniformly and maintain stability during repetitive rewrite of display information or continuous display state. Here, as to forces applied to the particles constituting display media, there are an attraction force between the particles due to Coulomb force, an imaging force with respect to the electrodes or substrates, an intermolecular force, a liquid bonding force, gravity and the like.

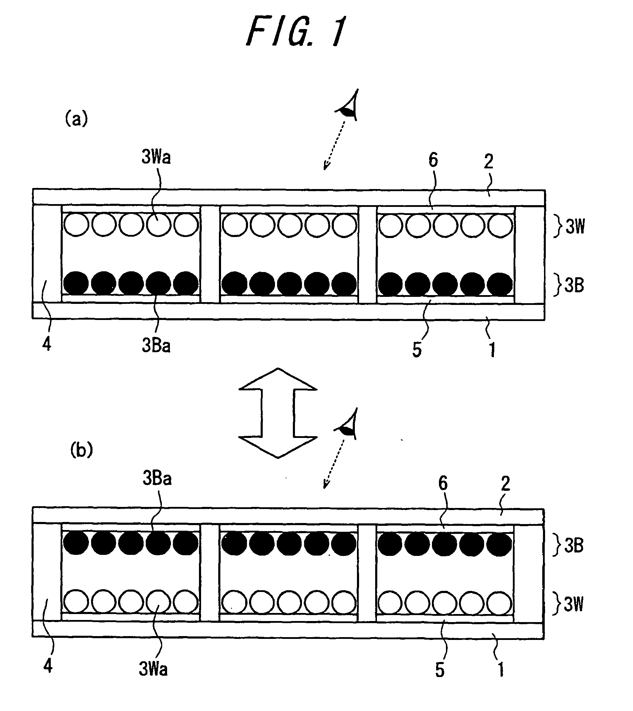

A principle construction of a panel of the charged particle moving method, as an example to be used for the display unit of the information display panel that is an object of the present invention will be explained with reference to Figs. 1a, 1b to Figs. 4a, 4b, and Figs. 5 to 8.

In the examples shown in Figs. 1a and 1b, at least two kinds of the display media composed as a particle assemblage including particles having at least optical reflectance and electrification characteristic (here, white color display media 3W composed as a particle assemblage containing negatively charged white particles 3Wa, and black color display media 3B composed as a particle assemblage containing positively charged black particles 3Ba) are provided each cell formed of partition walls 4 and moved vertically to substrates 1, 2 in accordance with an electric field generated by an application of voltage between an individual electrode 5 (pixel electrode) provided to the substrate 1 and an individual electrode 6 (pixel electrode) provided to the substrate 2. Then, a white color display (dotted display or segment display) is performed by having an observer view the white color display media 3W as shown in Fig. 1a, or a black color display (dotted display or segment display) is performed by having the observer view the black color display media 3B as shown in Fig. 1b. It is to be noted that the partition walls at a front side are omitted in Figs. 1a and 1b.

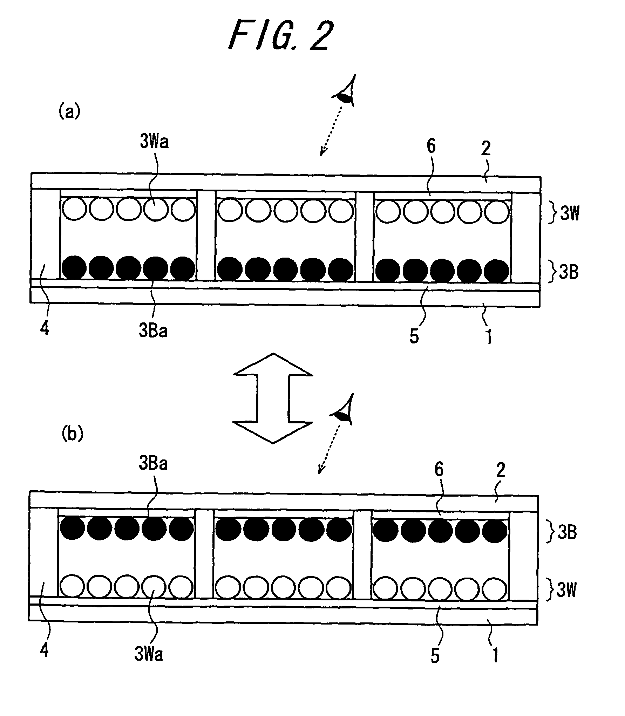

In the examples shown in Figs. 2a and 2b, at least two kinds of the display media composed as the particle assemblage including particles having at least optical reflectance and electrification characteristic (here, white color display media 3W composed as the particle assemblage containing negatively charged white particles 3Wa, and black color display media 3B composed as the particle assemblage containing positively charged black particles 3Ba) are provided in each cell formed of partition walls 4 and moved vertically to electrode substrates 1, 2 in accordance with the electric field generated by application of voltage between a pair of pixel electrodes formed by the electrode 5 (line electrode) provided to the electrode substrate 1 and the electrode 6 (line electrode) provided to the electrode substrate 2 that are oppositely and orthogonally crossed. Then, the white color display (dotted display) is performed by having the observer view the white color display media 3W as shown in Fig. 2a, or the black color display (dotted display) is performed by having the observer view the black color display media 3B as shown in Fig. 2b. It is to be noted that the partition walls at the front side are omitted in Figs. 2a and 2b.

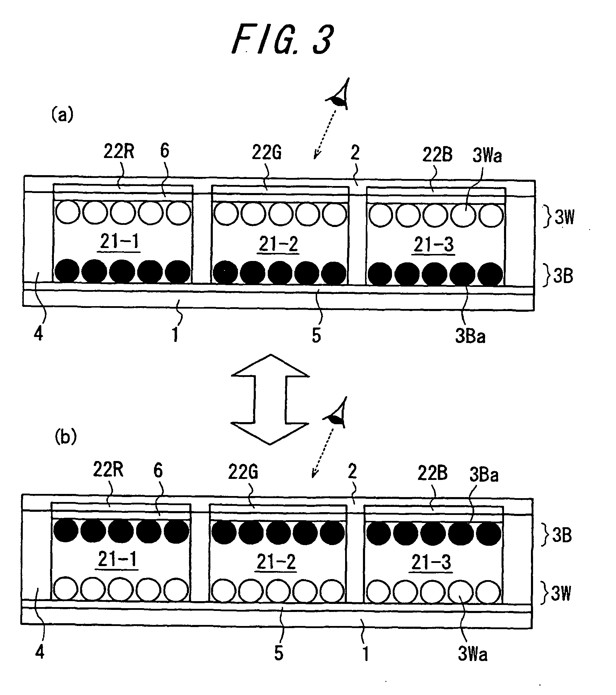

Figs. 3a and 3b show an example of color display with three cells (pixels) constituting a display unit (1 dot). In the examples shown in Figs. 3a and 3b, the white color display media 3W and the black color display media 3B, as the display media, are filled in all of the cells 21-1, 21-2 and 21-3, and a red color filter 22R, a green color filter 22G and a blue color filter 22B are provided to a first sell 21-1, a second sell 21-2 and a third sell 21-3, respectively, at an observer's side of each sell. Three cells (pixels) of the first sell 21-1, the second sell 21-2 and the third sell 21-3 together constitute the display unit (1 dot). In the present example, the white color display is performed to the observer by moving the white color display media 3W in all of the first sell 21-1, the second sell 21-2 and the third sell 21-3 to the observer's side as shown in Fig. 3a, while the black color display is performed to the observer by moving the black color display media 3B in all of the first sell 21-1, the second sell 21-2 and the third sell 21-3 to the observer's side as shown in Fig. 3b. It is also possible to perform multi-color displays by changing movement of the display media disposed in each pixel. It is to be noted that the partition walls at the front side are omitted in Figs. 3a and 3b.

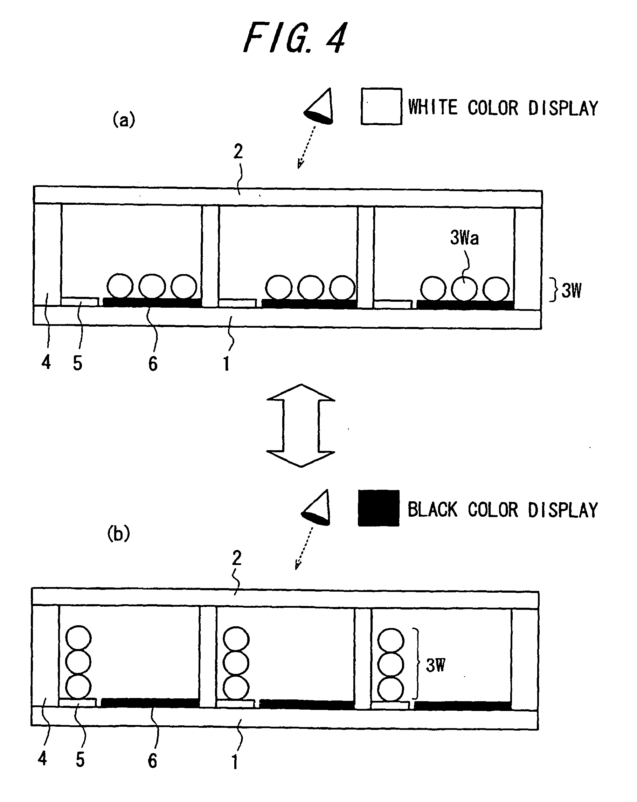

In the examples shown in Figs. 4a and 4b, one kind of the display media composed as the particle assemblage including particles having at least optical reflectance and electrification characteristic (here, white color display media 3W composed as the particle assemblage containing negatively charged white particles 3Wa) is provided in each cell formed of partition walls 4 and moved parallel to substrates 1, 2 in accordance with the electric field generated by an application of voltage between the electrode 5 provided to the substrate 1 and the electrode 6 in black at least at the surface thereof. Then, the white color display (dotted display) is performed by having the observer view the white color display media 3W as shown in Fig. 4a or the black color display (dotted display) is performed by having the observer view the electrode 6 in black as shown in Fig. 4b. It is to be noted that the partition walls at the front side are omitted in Figs. 4a and 4b.

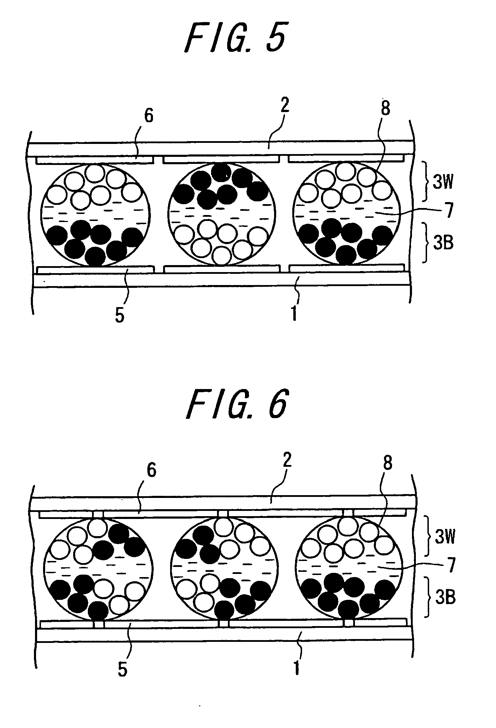

In the examples shown in Figs. 5 and 6, a microcapsule 8, filled with a particle assemblage of negatively charged white particles 3W and a particle assemblage of positively charged black particles 3B as well as the insulating liquid 7, as the display media having the display memory property, is disposed between the substrate 2 having a common electrode (conductive film) and the substrate 1 having the pixel electrode with a thin-film transistor (TFT) switch formed thereon. In the present example, white/black dotted display corresponding to the pixel electrode is performed by moving the display media in accordance with the electric field generated by an application of voltage between the electrode 5 provided to the substrate 1 and the common electrode 6 provided to the substrate 2. Positions of the microcapsule 8 and the pixel electrode 5 are corresponding in the example shown in Fig.5, while the positions thereof are non-corresponding in the example shown in Fig.6. It is to be noted that a spacer for securing a gap between the substrates is omitted in Figs. 5 and 6.

In order to perform a dot matrix display on the display unit adopting a method using the display media which do not have a driving threshold, it is inevitable to perform active driving and necessary to have a TFT (Thin Film Transistor) substrate on a rear side of the display unit. An electrophoresis method as an example of the method is shown in Figs.5, 6, in which the common electrode (conductive film) 6 and the pixel electrode 5 together form a counter electrode. In this case, the white color display media 3W and the black color display media 3B as well as the insulating liquid 7, together as the display media, are sealed in a microcapsule 9 which is disposed in the space between the electrode substrates 1, 2. In the present example, the white color display media 3W are the particle assemblage charged positively (+), while the black color display media 3B are the particle assemblage charged negatively (-). First, the electrode substrates 1, 2 are alternately applied with 0 (Volt) and V (Volt), so as to clear information such as an image previously displayed and perform the black color display on an entire display surface. At this point, the electrode substrate 1 is applied with V (Volt), while the pixel electrode of TFT is applied with 0 (Volt). Next, while the electrode substrate 1 is applied with 0 (Volt), the pixel electrode of the TFT for pixels desired to change to white provided on the electrode substrate 2 is applied with 70 (Volt), so as to change only the pixels desired to change to white.

On the other hand, the electrode substrates 1, 2 are alternately applied with 0 (Volt) and V (Volt), so as to clear information such as an image previously displayed and perform the white color display on the entire display surface. At this point, the electrode substrate 1 is applied with 0 (Volt), while the pixel electrode of TFT is applied with V (Volt). Next, while the electrode substrate 1 is applied with 70 (Volt), the pixel electrode of the TFT for pixels desired to change to black provided on the electrode substrate 2 is applied with 0 (Volt), so as to change only the pixels desired to change to black.

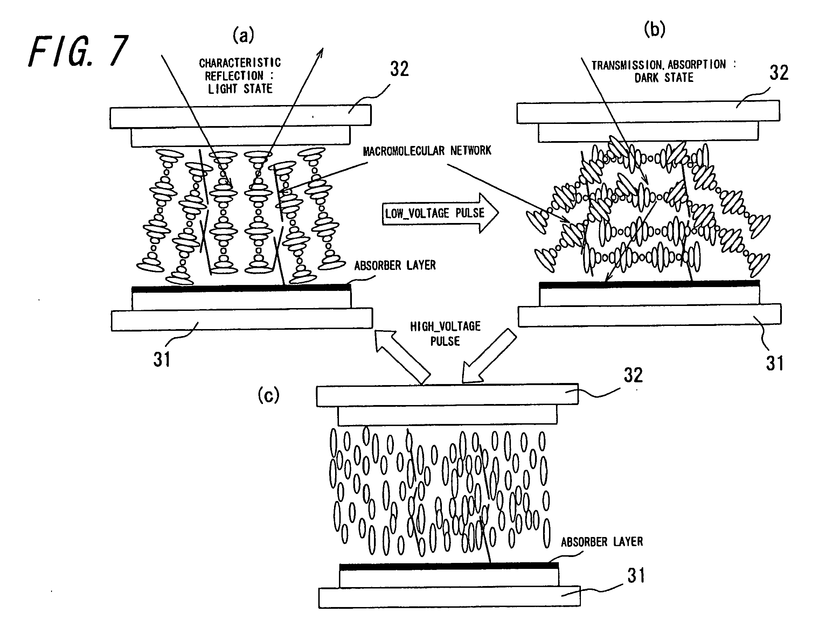

Figs. 7a to 7c exemplify a case where cholesteric liquid crystal, made of nematic liquid to which 20 to 40% of chiral agent is added, is sealed into the space between the electrode substrates 1, 2 and a voltage is applied thereto, so as to change an orientation state of the cholesteric liquid crystal and display information such as an image. First, in a planaer state as shown in Fig. 7a, which is a basic state , the cholesteric liquid crystal selectively reflects the light of a wavelength corresponding to a pitch of a spiral of the cholesteric liquid crystal. When a low-voltage pulse is applied to the electrode substrates 1, 2 while the cholesteric liquid crystal is in the planar state, the the cholesteric liquid crystal shifts to a focal conic state as shown in FIG. 7b. Since the light is transmitted in the focal conic state, the light transmitted is absorbed by a light absorbing layer provided on a surface of the electrode substrate 2, thereby the black color display is performed. Next, by application of a high-voltage pulse to the electrode substrates 1, 2, the cholesteric liquid crystal returns to be in the planar state shown in Fig. 7a via a homeotropic state shown in Fig. 7c. Those operations are performed for each pixel so as to display information such as an image. It is to be noted that the pitch of the spiral of the cholesteric liquid crystal can be controlled by changing a type and amount of chiral agent to be added and that a full-color display can be performed by setting so as to selectively reflect red light, green light and blue light and arranging them on top of one another in a longitudinal direction.

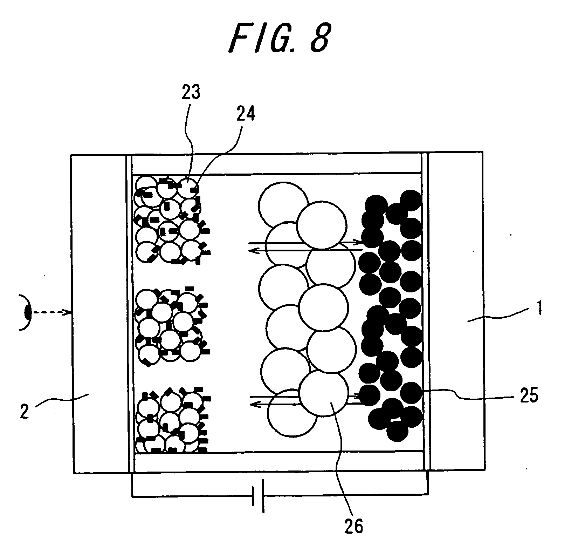

In an example shown in Fig. 8, an oxidized titanium ($TiO_2$) porous membrane is formed on the transparent electrode of the electrode substrate 2. A redox pigment 24, similar to viologen desivative, is absorbed to a surface 23 of the porous oxidized titanium. An antimony doped tin oxide membrane 25 is formed on the transparent electrode of the electrode substrate 1, and a layer of oxidized titanium particles, which is ion-permeable, is formed thereon. Electrolyte is sealed into the space between the electrode substrates. A color display is performed by applying electrical current between the electrodes such that the redox pigment 24 develops color in an oxidizing condition, while the white color display is performed by putting the redox pigment 24 in an reducing condition state to discolor into transparent such that the oxidized titanium membrane 26 formed on the electrode substrate 1 functions as a reflection layer. In this case, a wavelength of color can be changed and the color display is achieved by selection of redox pigment 24.

As set forth above, the present invention is preferably applicable to:

(1) the panel of the display unit of a particle move-in-the-air method which displays information such as an image by moving the display media, by sealing at least one kind of the display media, composed as the particle assemblage containing the charged particles having optical reflectance, into the air in the space between the electrode substrate, at least one of which is transparent, and applying the electric field to the display media;

(2) the panel of the display unit of an electrophoresis method (particle move-in-liquid method) which displays information such as an image by moving the display media, by disposing microcapsules into which display media, containing two kinds of charged particles with different optical reflectance and polar characters, and the insulating liquid are sealed, and applying the electric field to the display media;

(3) the panel of the display unit of the cholesteric liquid crystal method which displays information such as an image, by sealing cholesteric liquid crystal into the space between the electrode substrates, at least one of which is transparent, and controlling a voltage to apply between the substrates;

(4) the panel of the display unit of an electrochromic method which displays information such as an image, by sealing electrochromic material, whose transparency in the oxidizing condition is different from that in the reducing condition, into the space between the electrode substrates, at least one of which is transparent, and applying electric current between the electrodes so as to change the transparency between the oxidizing condition and the reducing condition because of an electrochemical reaction; and

(5) other panels of display units of such as an MEMS method having a bistable property and the display memory property, a deposition method by electrolysis of silver, or a method using dissolution reaction. Although the present invention is applicable to a panel of a display unit using a conventional liquid crystal method having no display memory property, in such a case a power is turned off and information on the display is cleared out when the display unit is detached from the drive circuit substrate after display rewrite, it is thus not applicable to a usage to carry the display unit while displaying information.

<A. Entire constitution of information display panel>

The following is an explanation of a detailed configuration of the information display panel in accordance to the present invention.

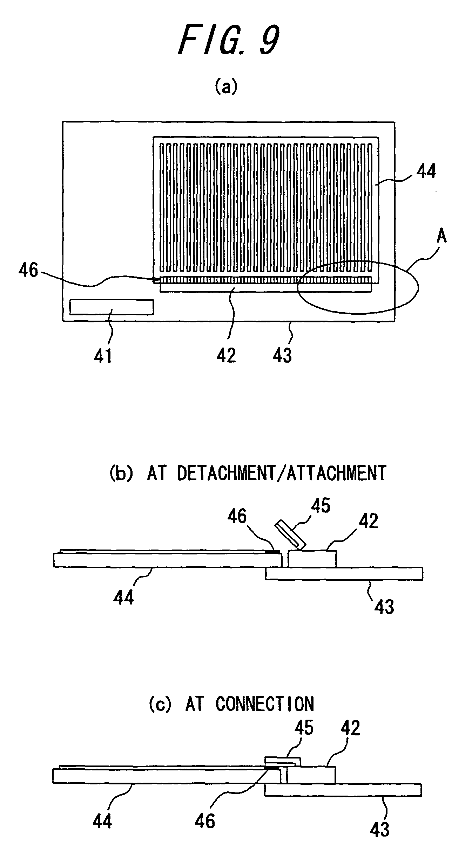

The display unit of the information display panel according to the present invention can adopt ones shown in Figs. 1a, 1b to Figs. 4a, 4b and Figs. 5 to 8. Fig. 9a shows an information display panel having a configuration in which an actuation driver 41 is mounted on a drive circuit substrate 43, and an attaching/detaching mechanism 42 on the drive circuit substrate 43 electrically connected to the actuation driver 41 and a connector 46 of a display unit 44 are electrically connected when the connector 46 is attached to the attaching/detaching mechanism 42 via a press-fit unit 45. The information display panel of the present invention having such a constitution is characterized in "not having a constitution in which the actuation driver is mounted on the panel by use of ACF (Anisotropic Conductive Film), but instead having a constitution in which the display unit and the actuation driver mounted on the drive circuit substrate is detachable".

The actuation driver 41, having an expensive IC mounted thereon, is connected to the pixel electrode disposed in the display area of the display unit 44 via the connector 46 so as to control the electric field to apply from the electrode to the display media. The connector 46 is an electrode terminal unit drawn in a linear fashion to the periphery (lower part of Fig. 9a) of the display unit 44, for electrically connecting the actuation driver 41 mounted on the drive circuit substrate and the connector 46 at the periphery of the display unit 44 via a press-fit member 45 by use of the attaching/detaching mechanism mounted on the drive circuit substrate. The drive circuit substrate 43 mounts the actuation driver 41 and the attaching/detaching mechanism 42, and may function as a case for the information display panel as well.

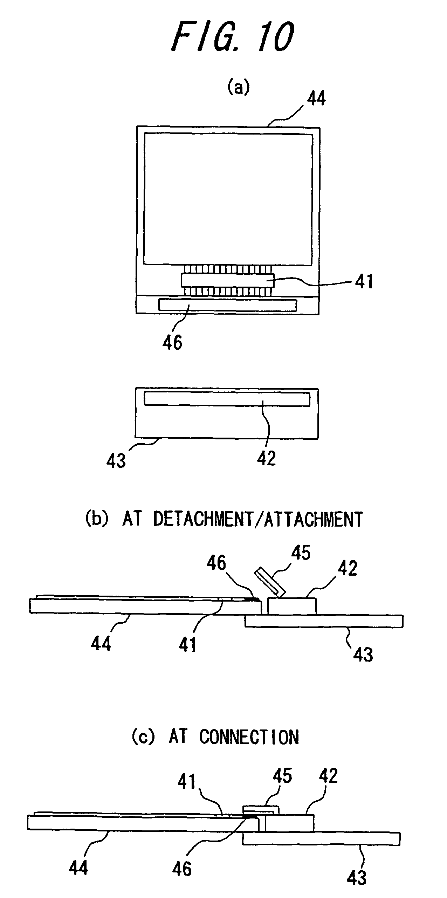

Fig. 10a shows the information display panel having a constitution in which the actuation driver 41 is mounted on the display unit 44 and the connector 46 of the display unit 44 and the attaching/detaching mechanism 42 on the drive circuit substrate 43 electrically connected to the drive circuit are electrically connected when attached to one another via the press-fit member 45. The information display panel of the present invention having such a constitution is **characterized in that** "although the actuation driver is mounted not on the drive circuit substrate but on the display unit and thus the actuation driver must be discarded when the display unit is broken, the display unit is detachable from the drive circuit substrate to be moved to elsewhere".

The actuation driver 41, having the expensive IC mounted thereon, is connected to the pixel electrode disposed in the display area of the display unit 44 so as to control the electric field to apply from the electrode to the display media. The connector 46 is the electrode terminal unit drawn in the linear fashion from the actuation driver 41 to the periphery (lower part of Fig. 10a) of the display unit 44, for electrically connecting the drive circuit mounted on the drive circuit substrate 43 and the connector 46 at the periphery of the display unit 44 via the press-fit member 45 by use of the attaching/detaching mechanism mounted on the drive circuit substrate 43. The drive circuit substrate 43 mounts the drive circuit and the attaching/detaching mechanism 42, and may function as the case for the information display panel as well.

It is preferred that the substrate at the periphery of the display unit 44 has a thickness between 0.07 mm and 0.5 mm. When the substrate has a thickness of less than 0.07 mm, desired durability of the display unit 44 cannot be obtained for multiple times of attaching and detaching operation with the attaching/detaching mechanism 42, while it is hard to constitute a desired attaching/detaching mechanism for support and electrical connection of the display unit 44 when the substrate has a thickness of over 0.5mm. It is preferred that the connector 46 drawn to the periphery of the display unit 44 has a thickness between 10 nm and 50 $\mu$m. When the connector has a thickness of less than 10 nm, desired durability of the display unit 44 cannot be obtained for multiple times of attaching and detaching operation with the attaching/detaching mechanism 42, while it is hard to constitute a desired attaching/detaching mechanism for support and electrical connection of the display unit 44 when the connector has the thickness of over 50 $\mu$m.

When the display unit 44 is attached or detached, the press-fit member 45 releases press-fitting of the connector 46 of the display unit 44 as shown in Fig. 9b, which is a detailed diagram illustrating a lateral view of a section A in Fig.9a, while mechanically fitting the connector 46 of the display unit 44 to the attaching/detaching mechanism 42 when connecting the display unit 44 as shown in Fig. 9c, which is a detailed diagram illustrating the lateral view of the section A in Fig 9a. At this point, the press-fit member 45, the attaching/detaching mechanism 42 and the drive circuit substrate 43 detachably support the display unit 44 from the drive circuit substrate 43 having the actuation driver 41 mounted thereon.

When the display unit 44 is attached or detached, the press-fit member 45 releases press-fit of the connector 46 of the display unit 44 as shown in Fig. 10b, while mechanically fitting the connector 46 of the display unit 44 to the attaching/detaching mechanism 42 when connecting the display unit 44, as shown in Fig. 10c. At this point, the drive circuit substrate 43, having the press-fit member 45 and the attaching/detaching mechanism 42 mounted thereon, detachably supports the display unit 44 having the actuation driver 41 mounted thereon.

According to the information display panel of the present invention, since the attaching/detaching mechanism (constituted of the press-fit member 45, the attaching/detaching mechanism 42 and the drive circuit substrate 43) is provided to the drive circuit substrate 43 having the actuation driver 41 mounted thereon for detachably supporting the display unit 44, it is possible to attach the display unit 44 to the attaching/detaching mechanism 42 of the drive circuit substrate for rewrite and display of information such as an image, and to detach the display unit 44 from the attaching/detaching mechanism to move to elsewhere while the display unit 44 is maintaining the image displayed thereon, as well as to replace only the display unit 44 without discarding the actuation driver 41 having the expensive IC mounted thereon when the display unit 44 causes a failure. It thereby achieves improvement of resource use efficiency by reusing the actuation driver having the expensive IC mounted thereon.

Moreover, according to the information display panel of the present invention, since the attaching/detaching mechanism (constituted of the press-fit member 45, the attaching/detaching mechanism 42 and the drive circuit substrate 43) is provided to the drive circuit substrate 43 so as to detachably supporting the display unit 44 having the actuation driver 41 mounted thereon from the drive circuit substrate 43, it is possible to attach the display unit 44 to the attaching/detaching mechanism 42 of the drive circuit substrate for rewrite and display of information such as an image, and to detach the display unit 44 from the attaching/detaching mechanism to be moved to elsewhere while maintaining the image displayed thereon, as well as to replace only the display unit 44 without discarding the drive circuit substrate 43 having the drive circuit formed thereon, in a case where the display unit 44 has a failure. It thereby achieves improvement of resource use efficiency by reusing the drive circuit substrate.

<B. Other embodiments of the display unit 44 constituting the information display panel>

The display unit 44 constituting the information display panel of the present invention according to other embodiments is **characterized in that** (1) the connection electrode, for connecting to the drive circuit provided on the connection substrate serving as the connector of the display unit correspondingly to the extraction electrode of the extraction electrode unit, is connected to the end of the display unit having the extraction electrode unit, so as to obtain an electrical continuity between the extraction electrode and the connection electrode for connecting to the drive circuit (first characteristic), and (2) a connection terminal unit is formed by providing the connection electrode for connecting to the drive circuit to the end opposite to the end connected to the extraction electrode, and has a double-sided attach constitution in which the connection electrodes for connecting to the drive circuit are disposed on both surfaces of the connection substrate at the connection terminal unit so as to be attached to the attaching/detaching mechanism of the drive circuit substrate for electrical connection (second characteristic). Each characteristic will be explained in turn herebelow.

<First characteristic>

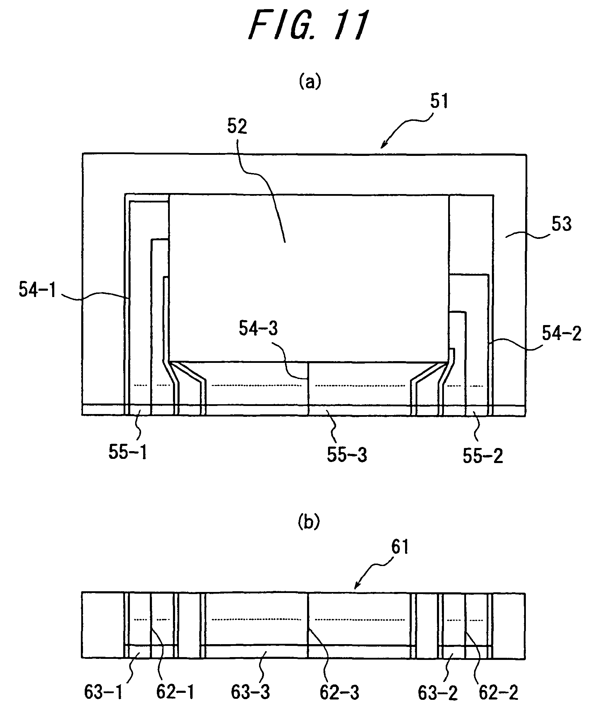

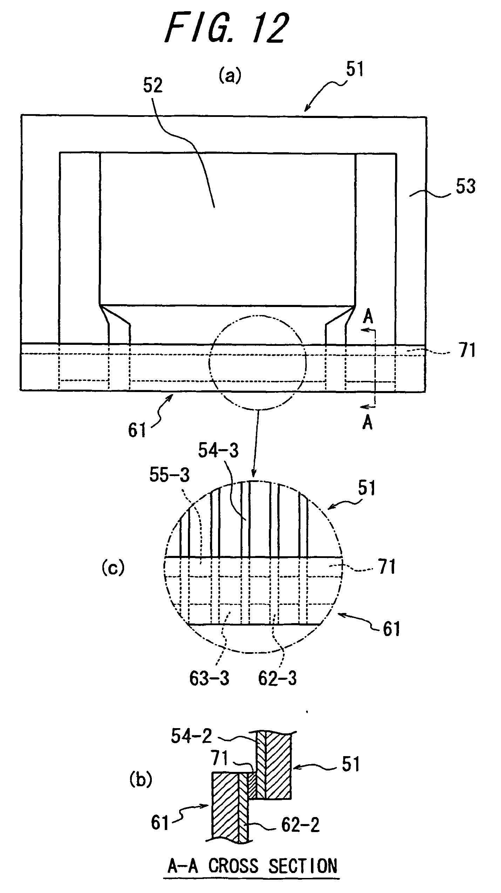

Figs. 11a, 11b, 12a, 12b, and 12c are diagrams respectively explaining an example of the first characteristic of the display unit constituting the information display panel of the present invention. In order to obtain the display unit 44 constituting the information display panel of the present invention, first prepared are a display panel 51 shown in Fig. 11a and a connection substrate 61 serving as the connector shown in Fig. 11b.

As stated above, the display unit panel 51 is constituted of two substrates and provided with an information display area 52 for actually displaying information such as an image and a frame unit 53 at a periphery thereof. In the information display area 52, according to the example shown here, a plurality of line electrodes (not shown) are provided orthogonally to one another and an extraction electrode unit 55 is formed, for connecting to an external apparatus, by providing an extraction electrode 54 for extending each line electrode to one end of the display unit panel 51 via the frame unit 53. In the example shown in Fig. 11a, the line electrodes running horizontally in an upper half are assigned to an extraction electrode 54-1 at the left side, while the line electrodes running horizontally in a lower half are assigned to an extraction electrode 54-2 at the right side, so as to form an extraction electrode unit 55-1 and an extraction electrode unit 55-2, respectively. The line electrodes running vertically are extended to an end by an extraction electrode unit 54-3, so as to form an extraction electrode unit 55-3. At the ends of the display unit panel 51, the extraction electrode units 55-1, 55-2 and 55-3 may be provided to both of the substrates, or it is also possible to extract one of them to the same substrate as the other by use of conductive particles and the likes to provide on the same substrate as the one. It is to be noted that the extraction electrodes 54-1, 54-2 and 54-3 are formed of ITO, for example, similarly to the electrode of the information display area 52.

It is also possible to dispose the connection substrates in different directions by disposing the extraction electrode of the line electrodes running in the horizontal direction at the side of the display panel and connecting to the connection substrate and the extraction electrode of the line electrodes running in the vertical direction at a long side of the display panel and connecting to the connection substrate. In such a case, although it is necessary to provide connection substrates for both in the horizontal direction and in the vertical direction, there is a merit such as that the extraction electrodes are drawn only shortly and, comparing to a case of connecting at one side, it can obtain a longer length of the connection substrate in a connecting direction, which enables wide pitches of the electrodes for connection.

The connection substrate 61 serving as the connector has the same width as that of the display unit panel 51. Connection electrodes 62-1, 62-2 and 62-3 for connecting to the drive circuit are provided correspondingly to the extraction electrodes 54-1, 54-2 and 54-3 of the extraction electrode units 55-1, 55-2 and 55-3 from one end to the other end, and connection terminal units 63-1, 63-2 and 63-3 are formed for connecting to the attaching/detaching unit of the drive circuit substrate. It is preferred that the connection substrate 61 is made of a high-strength substrate such as a flexible print substrate (FPC) formed of a glass fiber reinforced epoxy resin substrate (so-called gla-epo substrate) or a polyimide substrate. A variety of plastics such as polyethylene terephthalate (PET), acryl, polycarbonate, vinyl chloride can also be used for the connection substrate 61.

A thickness of a part serving as the connector (thickness of the connector attached to the attaching/detaching mechanism of the drive circuit substrate) is set between 0.07 mm and 1.0 mm. In a case where the thickness is less than 0.07mm, it causes a problem not to be able to support the display unit and will be bent when attached to the attaching/detaching mechanism, while in a case where the thickness is over 1.0 mm, it causes a failure that the part serving as the connector is too thick comparing to the display unit and a poor balance from a point of view of a design of the display unit.

Among the connection electrode provided to the connection substrate, an electrode 62 for connecting to the attaching/detaching mechanism connected to the drive circuit is a metallic electrode formed of metal having a good conductive property. Materials for the electrode may be metals such as copper, aluminum, nickel, chrome, noble metals such as gold, silver, platinum and palladium, or mixture thereof. In particular, it is preferred to use copper, which is inexpensive having excellent bend-resistance strength and good conductive property. As a method to form the electrode, there are used a method to form patterning on a thin film of the above-exemplified materials by such as a spattering method, a vacuum deposition method, a plating method, a CVD (chemical vapor deposition) method, a paste coating method and the likes, or a method to form patterning after laminating with a metallic film (for example, rolled copper foil and the likes). In particular, it is preferred to use the plating method and the method to laminate with the metallic film, as they can control a thickness easily and provide excellent strength after patterning formation.

Since the connection electrode 62, to be attached to the attaching/detaching mechanism connected to the drive circuit, tends to have friction loss because of repeated friction at connecting and disconnecting, a thickness of the connection electrode 62 is set to 0.01 to 50 $\mu$m, preferably 0.1 to 20 $\mu$m. When the thickness is less than 0.01 $\mu$m, it causes mis-conduction in a short period because of electrode loss owing to friction. When the thickness is more than 50 $\mu$m, it takes too long for electrode formation to produce it at low-cost.

It is preferred that the connection electrode 62, to be attached to the attaching/detaching mechanism connected to the drive circuit, is a metallic electrode formed of a copper-plated film or copper film (laminate). Other than copper, it is also possible to use metals such as aluminum, nickel, chrome, the noble metals such as gold, silver, platinum and palladium, or the mixture thereof. As for a position of the connection electrode 62 for connecting to the attaching/detaching mechanism connecting to the drive circuit by overlapping the display unit panel 51 and the connection substrate 61 as stated below, it is possible to obtain the display unit constituting the information display panel of the present invention as shown in Fig. 12a-12c. Fig. 12a and Fig. 12b show a front view of the display unit constituting the information display panel and a side view of the display unit constituting the information display panel shown in Fig. 12a, respectively. Fig. 12c shows a detail view of a part surrounded by a circle in Fig. 12a.

The connector constituting the display unit of the information display panel of the present invention shown in Fig. 12a-12c can be obtained by connecting the connection substrate 61 provided with the connection electrodes 61-1 to 62-3 for connecting to the attaching/detaching mechanism connecting to the drive circuit correspondingly to the extraction electrode units 55-1 to 55-3 to the end of the display unit panel 51 having the extraction electrode units 55-1 to 55-3 as shown in Fig.11a, so as to obtain electrical continuity between the extraction electrodes 54-1 to 54-3 and the connection electrodes 62-1 to 62-3 for connecting to the attaching/detaching mechanism connecting to the drive circuit. In particular, as shown in Fig. 12a-12c, an Anisotropic Conductive Film (ACF) 71 is disposed between the end of the display panel 51 having the extraction electrodes 55-1 to 55-3 and the connection substrate 61, so as to mechanically connecting the end of the display unit panel 51 having the extraction electrode units 55-1 to 55-3 to the connection substrate 61, as well as to obtain electrical continuity between the extraction electrodes 54-1 to 54-3 and the connection electrodes 62-1 to 62-3 for connecting to the attaching/detaching mechanism connecting to the drive circuit.

The connector, constituting the display unit of the information display panel of the present invention stated above, electrically connects the extraction electrodes 54-1 to 54-3 of the display unit 51 to the connection electrodes 62-1 to 62-3 for connecting to the attaching/detaching mechanism connecting to the drive circuit on the connection substrate 61, which is an FPC with high strength, by use of an ACF 71 and the likes and inserts the connection terminal units 63-1 to 63-3 of the connection electrodes 62-1 to 62-3 for attaching to the attaching/detaching mechanism connecting to the drive circuit on the connection substrate (FPC) into the attaching/detaching mechanism of the insert-and-remove method on the drive circuit substrate, thereby avoids a damage of the conductive film, comparing to an example having no connection terminal unit. For example, with a constitution in which a patterning is performed to a substrate constituted of a polyimide substrate laminated with a copper film to obtain an FPC as an intermediary, the connection unit constituted of the ITO electrode of the panel is adhered by ACF and the likes, and inserting into and removing from the attaching mechanism of the insert-and-remove method of the drive circuit substrate at an opposite site of the FPC, it is expected to improve strength dramatically in comparison with a case where a conductive film constituted of the ITO electrode on the panel or evaporated metallic conductive film is directly inserted into or removed from. Thereby, it is expected to significantly increase the number of times to insert into and remove from.

In addition, as a method to mechanically connect and obtain the electric continuity other than using the ACF, a method using an Anisotropic Conductive Paste (ACP), a method using Non-Conductive Film (NCF), and a method using Non-Conductive Paste (NCP) are also applicable. Although the attaching/detaching mechanism of the insert-and-remove method is exemplified here, it is also applicable to the attaching/detaching mechanism of the press-fit method stated above.

<Second characteristic>

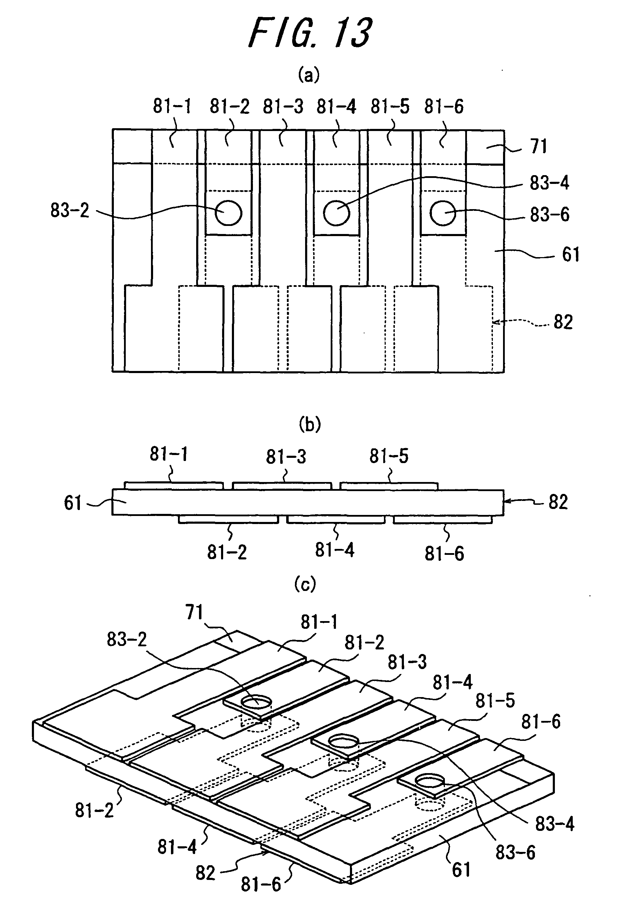

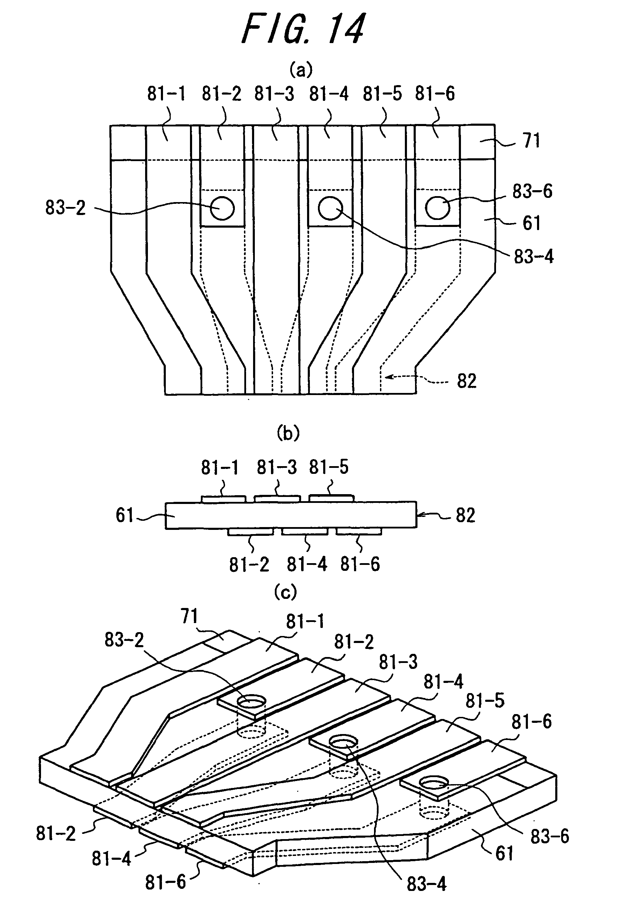

Fig. 13a to 13c and Fig. 14a to 14c are diagrams respectively explaining an example of the second characteristic of the display unit constituting the information display panel of the present invention. Fig. 13a is a front view of an example of the connection substrate constituting the connector of the display unit of the information display of the present invention, while Fig. 13b and Fig. 13c are a bottom view of the connection substrate in Fig. 13a and a perspective view of the connection substrate in Fig. 13a, respectively. Similarly, Fig. 14a is a front view of another example of the connection substrate constituting the connector of the display unit of the information display of the present invention, while Fig. 14b and Fig. 14c are a bottom view of the connection substrate in Fig. 14a and a perspective view of the connection substrate in Fig. 14a, respectively. For the sake of simplification of explanations, the connection electrode for connecting to the attaching/detaching mechanism connecting to six drive circuits is exemplified in each example shown in Fig. 13a-13c and Fig. 14a-14c, although there actually are connection electrodes for connecting to the attaching/detaching mechanism connecting to the drive circuit, as many as the number of the line electrodes constituting the information display area of the display unit of the information display panel.

The example shown in Fig. 13a-13c is characterized in that connection electrodes 81-1 to 81-6 for connecting to the attaching/detaching mechanism connecting to the drive circuit are provided correspondingly to the extraction electrode 54 of the extraction electrode unit 55 of the display unit panel 51 from one end at a side of the extraction electrode 54 to another end of a side of the attaching/detaching mechanism of the drive circuit substrate, and a connection terminal unit 82 is formed at the other end for connecting to the attaching/detaching mechanism of the drive circuit substrate, so as to form the double-sided attach constitution. Therefore, through holes 83-2, 83-4, 83-6, penetrating through a top surface and a rear surface are provided at a middle part of each of the connection electrodes 81-2, 81-4 and 81-6 for connecting to the attaching/detaching mechanism connecting to the drive circuit, so as to maintain an electrical connection of the top surface and the rear surface. It thus enables to dispose the connection electrodes 81-2, 81-4 and 81-6 on the rear surface, for connecting to the attaching/detaching mechanism connecting to the drive circuit. In addition, the electrode area of the connection electrodes 81-1 to 81-6, at the connection terminal unit 82 for connecting to the attaching/detaching mechanism connecting to the drive circuit, are twice the size of them mounted on only one surface. This constitution can be achieved only by the double-sided attach constitution. In the present example, since the area connecting to the attaching/detaching mechanism of the drive circuit among the connection electrodes 81-1 to 81-6 for connecting to the attaching/detaching mechanism connecting to the drive circuit is doubled, it is possible to improve reliability of connection.

In the example shown in Fig. 14a to 14c as well, similarly to the example shown in Fig. 13a to 13c, the connection electrodes 81-1 to 81-6 for connecting to the attaching/detaching mechanism connecting to the rive circuit is mounted on both sides at the connection terminal unit 82. It is a point of the example shown in Fig. 14a to 14c different from the example shown in Fig. 11a to 11c that widths of the connection electrodes 81-1 to 81-6, for connecting to the attaching/detaching mechanism connecting to the drive circuit at the connection terminal unit 82, is the same as those of a single-side attach constitution but the size of the connection terminal unit 82 is half. This configuration also can be achieved only by the double-sided attach constitution. In the present example, a size of the connection terminal unit 82, that is, a connection area for connecting to the attaching/detaching mechanism can be reduced to half, which facilitates attaching and detaching operation and increases a degree of freedom of a design.

Although the attaching/detaching mechanism of the inserting-and-removing method is exemplified here, it is also applicable to the attaching/detaching mechanism of the press-fit method stated above.

The following is an explanation of each member constituting the display unit of the information display panel according to the present invention.

As the substrate of the display unit, at least one of the substrates is the transparent substrate through which a color of the display media can be observed from outside of the information display panel, and it is preferred to use a material having a high transmission factor of visible light and an excellent heat resistance. The other substrate may be transparent or may be opaque. Examples of the substrate material include polymer sheets such as polyethylene terephthalate (PET), polyethylene naphthalate (PEN), polyethylene (PE), polycarbonate (PC), polyimide (PI), polyether sulfone (PES) or acryl, and glass sheets, quartz sheet, metal sheets and the likes. Transparent materials among the above may be used as the substrate at the front side. The thickness of the substrate is preferably 2 to 2000 $\mu$m, more preferably 5 to 1000 $\mu$m. When the substrate is too thin, it becomes difficult to maintain strength and distance uniformity between the substrates, while it becomes a problem for a thin-type information display panel when the thickness is thicker than 2000 $\mu$m.

In order to use a part of the panel substrate of the display unit, on which the electrode (connection electrode) is formed, as the connector, since a periphery portion of the panel substrate functions as a connector portion to be mounted on the attaching/detaching mechanism of the drive circuit substrate, it is preferred to make thickness thereof 0.07 to 1.0 mm.

As a material of the electrode to be provided to the substrate of the display unit, it is made of metals such as aluminum, silver, nickel, copper, gold, or, conductive metal oxides such as indium tin oxide (ITO), zinc-toped indium tin oxide (IZO), indium oxide, conductive tin oxide, antimony tin oxide (ATO), conductive zinc oxide and so on, or, conductive polymers such as polyaniline, polypyrrole, polythiophene and so on, and they are used by being suitably selected. Methods for forming the electrode is a method in which the materials mentioned above are made to a thin film by means of sputtering method, vacuum vapor deposition method, CVD (chemical vapor deposition) method, coating method, a method to laminate a metallic foil (for example, the rolled copper foil), a method in which conductive materials and solvents are mixed with synthetic resin binder and the mixture is sprayed. A transparency is necessary for the electrode provided to the display area of the display unit at an observation side (display surface side), but it is not necessary to the substrate at a rear side. In both cases, the materials mentioned above, which are conductive and have a pattern formation capability, can be suitably used. Additionally, the thickness of the electrode at the display area may be suitable unless the electroconductivity is absent or any hindrance exists in optical transparency, and it is preferable to be 0.01 to 10 $\mu$m, more preferable to be 0.05 to 5 $\mu$m. The material and the thickness of the electrode arranged to the rear substrate are the same as those of the electrode arranged to the substrate at the display side, but transparency is not necessary.

As the partition wall provided to the information display area of the display unit according to need to the substrate, a shape of the partition wall is suitably designed in accordance with a kind of the display media used for the display and is not restricted. However, it is preferred to set a width of the partition wall to 2 - 100 $\mu$m, more preferably 3 - 50 $\mu$m, and to set a height of the partition wall to 10 - 500 $\mu$m, more preferably 10 - 200 $\mu$m. Moreover, as a method of forming the partition wall, use may be made of a double rib method wherein ribs are formed on the opposed substrates 1, 2 respectively and they are connected with each other and a single rib method wherein a rib is formed on one of the opposed substrates only. The present invention may be preferably applied to both methods mentioned above.

The cell formed by the partition walls each made of rib has a square shape, a triangular shape, a line shape, a circular shape and a hexagon shape, and has an arrangement such as a grid, a honeycomb and a mesh, as shown in Fig. 6 viewed from a plane surface of the substrate. It is preferred that the portion corresponding to a cross section of the partition wall observed from the display side (an area of the frame portion of the display cell) should be made as small as possible. In this case, a clearness of the image display can be improved.

Here, as the formation method of the partition wall, use may be made of a die transfer method, a screen-printing method, a sandblast method, a photolithography method and an additive method. These methods may be preferably used for the information display panel installed in the information display device. Among them, it is preferred to use a photolithography method using a resist film or a die transfer method.

Next, it will be explained about the charged particles (hereinafter, called as particles as well) in a case where a particle assemblage containing the charged particles is used as the display media disposed in the information display area of the display unit of the information display panel according to the present invention. The particles for display media are used as the particle assemblage composed of only the particles themselves or a particle assemblage composed of mixture with other particles.

The particle may be composed of resins as a main ingredient, and can include according to need charge control agents, coloring agent, inorganic additives and so on. Hereinafter, typical examples of resin, charge control agent, coloring agent, additive and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon.

Examples of blue pigments include C.I. pigment blue 15: 3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7, Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent. The particles for display media having a desired color can be produced by mixing the coloring agents mentioned above.

Moreover, as the average particle diameter $d(0.5)$ of the charged particles (hereinafter, referred to as particles as well) used as the display media in the charged particle moving method, it is preferred to set $d(0.5)$ to 1 - 20 $\mu$m and to use even particles. If the average particle diameter $d(0.5)$ exceeds this range, the image clearness sometimes deteriorated, and, if the average particle diameter is smaller than this range, an agglutination force between the particles becomes larger and the movement of the particles is prevented.

Further, it is preferred that particle diameter distribution Span of the particle assemblage used as the display media, which is defined by the following formula, is less than 5 preferably less than 3:

$$\text{Span} = (d(0.9) - d(0.1))/d(0.5) \; ;$$

(here, $d(0.5)$ means a value of the particle diameter expressed by $\square$m wherein an amount of the particles having the particle diameter larger than or smaller than this value is 50%, $d(0.1)$ means a value of the particle diameter expressed by $\mu$m wherein an amount of the particles having the particle diameter smaller than this value is 10%, and $d(0.9)$ means a value of the particle diameter expressed by $\mu$m wherein an amount of the particles having the particle diameter smaller than this value is 90%).

If the particle diameter distribution Span of the particles is set to not more than 5, the particle diameter becomes even and it is possible to perform an even particle movement.

Furthermore, among the particle assemblages used, it is preferred to set a ratio of d(0.5) of the particle assemblage having smallest diameter with respect to d(0.5) of the particle assemblage having largest diameter to 10 or less. The particles having different charge characteristics move reversely even if the particle diameter distribution Span is made smaller. Therefore, this is a preferred range where each particle has approximately the same size and each particle assemblage can easily move reversely.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution.

In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

Furthermore, in the case of using the method to drive the display media, composed of the charged particles, in the space, it is important to control a gas in a gap surrounding the display media between the panel substrates of the display unit, and a suitable gas control contributes an improvement of display stability. Specifically, it is important to control a humidity of the gas in the gap to not more than 60% RH at 25°C, preferably not more than 50% RH.

The above gap means a gas portion surrounding the display media obtained by substituting the electrodes 5, 6 (in the case that the electrodes are arranged inside of the substrate), an occupied portion of the display media, an occupied portion of the partition walls 4 (in the case that the partition walls are arranged) and a seal portion of the panel of the display unit from the space between the substrate 1 and the substrate 2 in Figs. 1a, 1b - Figs. 4a, 4b and Figs. 5, 6.

A kind of the gas in the gap is not limited if it has the humidity mentioned above, but it is preferred to use dry air, dry nitrogen gas, dry argon gas, dry helium gas, dry carbon dioxide gas, dry methane gas and so on. It is necessary to seal this gas in the information display panel so as to maintain the humidity mentioned above. For example, it is important to perform the operations of filling the particles for display media and assembling the information display panel under an atmosphere having a predetermined humidity and to apply a seal member and a seal method for preventing a humidity inclusion from outside of the device.

In the case where the panel of the display unit as an object of the present invention uses the particle assemblage as the display media, although a space between the substrates is not restricted as long as the particles for display media can be moved and a contrast can be maintained, it is adjusted normally to 10 - 500 μm, preferably 10 - 200 μm.

Moreover, it is preferred to control a volume occupied rate of the particles for display media in a space between the opposed substrates to 5 - 70 %, more preferably 5 - 60 %. If the volume occupied rate of the particles or the liquid powders exceeds 70 %, the particles for display media become difficult to move, and if it is less than 5 %, a sufficient contrast cannot be obtained.

Although it has been described about the panel of the display unit which adopts the method using the particle assemblage containing charged particles as the display media, the present invention is also applicable to the panel of the display unit using the display media having the display memory property. The panel of the display unit having the display memory property may be the one adopting a cholesteric liquid crystal method, a charged particle electrophoresis method and the electrochromic method.

Although the present invention will be explained specifically in detail with reference to the examples and the comparative examples in the following, the present invention is not limited thereto.

(A. Entire constitution of information display panel)

<Embodiment 1: Constitution with actuation driver mounted on drive circuit substrate>

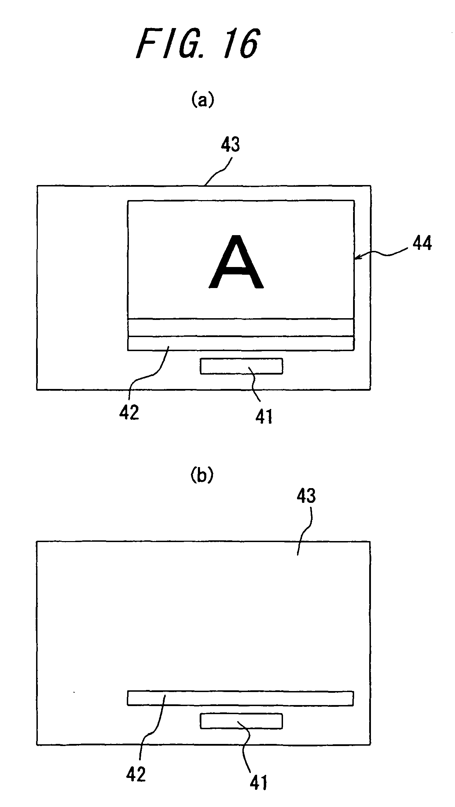

First, the drive circuit substrate 43 is prepared having an attaching/detaching mechanism of press-fit method 42 and the actuation drive 41 mounted on the bottom end thereof, as shown in Fig. 16b. Then, by use of the attaching/detaching mechanism of press-fit method 42 disposed on the drive circuit substrate 43 as shown in Figs. 9b and 9c, a display unit 44 is detachably supported by the drive circuit substrate 43 having the actuation driver 41 mounted thereon, as shown in Fig. 16a, so as to obtain the information display panel according to the embodiment 1.

In a case where the display unit 44 has a failure, the information display panel according to the embodiment 1 can discard only the display unit 44, which does not have the actuation driver 41 mounted thereon, and replace it with a new display unit 44. It thereby enables to reuse the actuation driver 41 having an expensive IC mounted thereon.

<Embodiment 2>

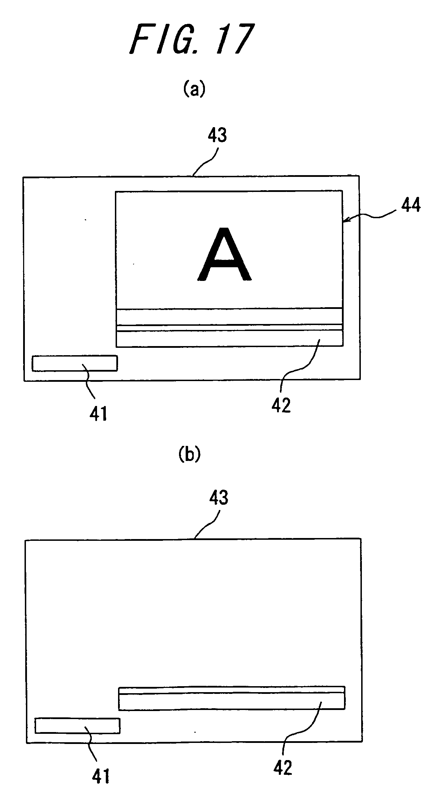

First, the drive circuit substrate 43 is prepared having the attaching/detaching mechanism of press-fit method 42 at a lower part thereof and the actuation driver 41 at a bottom left thereof. Then, as shown in Fig. 17a, by use of the attaching/detaching mechanism of press-fit method 42 on the drive circuit substrate 43 as shown in Fig. 17a, the display unit 44 is detachably supported by the drive circuit substrate 43 having the actuation driver 41 mounted thereon, so as to obtain the information display panel according to the embodiment 2.

In a case where the display unit 44 has a failure, the information display panel according to the embodiment 2 can discard only the display unit 44, which does not have the actuation driver 41 mounted thereon, and replace it with a new display unit 44. It thereby enables to reuse the actuation driver 41 having an expensive IC mounted thereon.

<Embodiment 3>

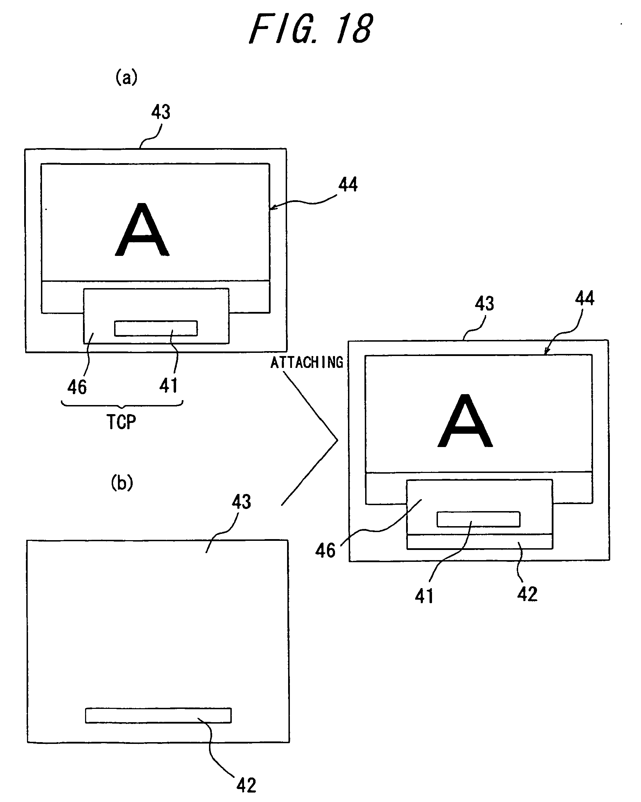

First, the drive circuit substrate 43 is prepared having the attaching/detaching mechanism of press-fit method 42 is mounted thereon, as shown in Fig. 18b. Then, as shown in Fig.18a, the actuation driver 41 and a connector 46 are mounted on the display unit 44 by TCP (Tape Career Package) method, such that the display unit 44 is detachably supported by the attaching/detaching mechanism of press-fit method 42 on the drive circuit substrate 43, so as to obtain the information display panel according to the embodiment 3.

In a case where the display unit 44 has a failure, it is difficult for the information display panel according to the embodiment 3 to reuse the actuation driver 41 having the expensive IC mounted thereon, for the reasons such as that an adhesive for ACF (Anisotropic Conductive Film) remains. Thus, the actuation driver 41 having the expensive IC mounted thereon is discarded when the display unit 44 has the failure. Still, this information display panel has advantages such as excellent portability of the display unit 44, which is removable from the drive circuit substrate 43, and reusability of the drive circuit substrate 43.

<Embodiment 4>

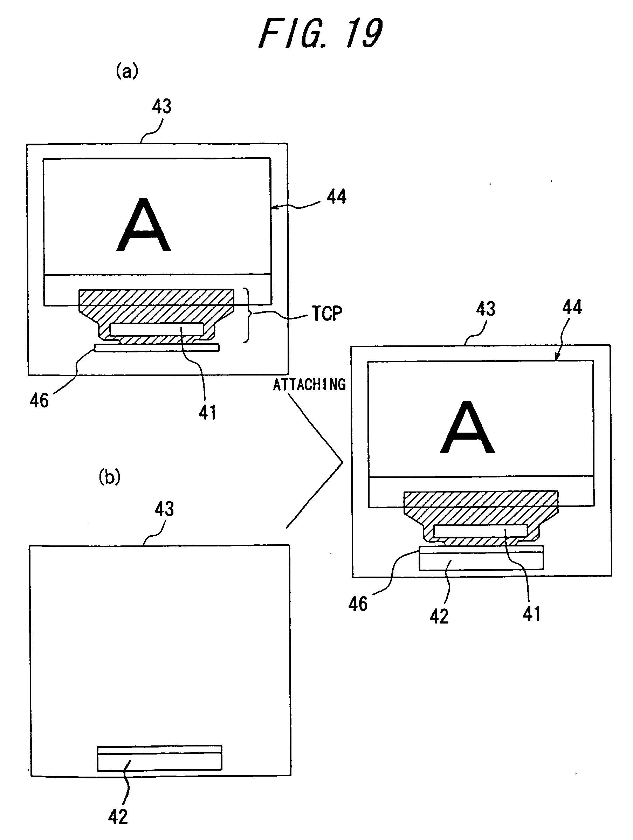

First, as shown in Fig. 19b, the drive circuit substrate 43 is prepared having the attaching/detaching mechanism of press-fit method 42 at the lower part thereof. Then, as shown in Fig. 19a, the actuation driver 41 and a connector 46 with an electrode having a thickness of 10 micrometers are mounted on the display unit 44 by TCP (Tape Career Package) method, such that the display unit 44 is detachably supported by the attaching/detaching mechanism of press-fit method 42, so as to be used as the information display panel according to the embodiment 4.

In a case where the display unit 44 has a failure, it is difficult for the information display panel according to the embodiment 3 to reuse the actuation driver 41 having the expensive IC mounted thereon, for the reasons such as that an adhesive for ACF (Anisotropic Conductive Film) remains. Thus, the actuation driver 41 having the expensive IC mounted thereon is discarded when the display unit 44 has the failure. Still, this information display panel has advantages such as excellent portability of the display unit 44, which is removable from the drive circuit substrate 43, and reusability of the drive circuit substrate 43.

(B. First characteristic of display unit constituting information display panel)

<Embodiment 11>

The panel of the display unit is produced having ITO, patterned on a substrate made of polyethylene terephthalate (PET), as the electrode. A transparent substrate having ITO film patterned in a stripe state was provided on a surface of the substrate made of polyethylene terephthalate (PET) having a thickness of $125\mu m$. The partition walls of $5\mu m$ in height and $30\mu m$ in width are formed in a rectangular pattern on the substrate and the charged particles as the display media are sealed into cells surrounded by the partition walls, onto which an electrode film having ITO film patterned in the stripe state was adhered, so as to produce the panel of the display unit. At this point, ITO electrode patterned on two facing substrate films was adhered in a direction orthogonal to each other, so as to be able to display in a matrix state.

The ITO electrode produced on the substrate was directly attached to the attaching/detaching mechanism of the drive circuit substrate to electrically connect to the drive circuit. Information is displayed by writing the panel of the display unit attached to the drive circuit substrate. Then, it was repeated to remove the display unit from the attaching/detaching mechanism of the drive circuit substrate and attach the display unit to the attaching/detaching mechanism and rewrite, so as to examine attaching/detaching operation and display rewrite. As a result, it was confirmed that no failure was caused on the display even after a hundred times of this examination and even a single disconnection was not caused in either vertical direction or horizontal direction at the electrode unit.

<Embodiment 12>

A connection FPC using ACF for connecting to the attaching/detaching mechanism is connected to the panel of the display unit same as that in the embodiment 11. Polyimide plated with a copper electrode having a thickness of $3 \mu m$ was used as the connection FPC serving as a connector. The copper electrode was inserted into and pulled out from an attaching/detaching mechanism of an insert-and-remove method to examine display rewrite. In the similar manner as the embodiment 11, it was repeated to remove the display unit by pulling the copper electrode out from the attaching/detaching mechanism of the drive circuit substrate and attaching the display unit to the attaching/detaching mechanism by inserting the copper electrode into the attaching/detaching mechanism and rewrite, so as to examine attaching/detaching operation and display rewrite. As a result, it was confirmed that no failure was caused on the display even after a hundred times of this examination to pull out and insert the copper electrode and even a single disconnection was not caused in either vertical direction or horizontal direction at the electrode unit.

<Embodiment 13>

A connection FPC using ACF for connecting to the attaching/detaching mechanism of the insert-and-remove method is connected to the panel of the display unit same as that in the embodiment 11. Polyimide of a substrate laminated with a copper film having a thickness of $10\mu m$ and performed patterning was used as the connection FPC serving as the connector. The copper electrode was inserted into and pulled out from an attaching/detaching mechanism of the insert-and-remove method to examine display rewrite. In the similar manner as the embodiment 11, it was repeated to remove the display unit by pulling the copper electrode out from the attaching/detaching mechanism of the drive circuit substrate and attach the display unit to the attaching/detaching mechanism by inserting the copper electrode into the attaching/detaching mechanism and rewrite. As a result, it was confirmed that no failure was caused on the display even after a hundred times of this examination to pull out and insert the copper electrode and even a single disconnection was not caused in either vertical direction or horizontal direction at the electrode unit.

<Embodiment 14>

A TFT was formed by making a wiring metallic electrode by forming an insulating film on a front surface of a stainless substrate having a thickness of 100 $\mu m$ and performing aluminum spattering thereon and making amorphous silicon as a semiconductor layer by a CDV method. A base member is prepared by forming ITO film on the front surface of polycarbonate resin (PC) having a thickness of 125 $\mu m$, and cholesteric liquid crystal having the memory property is sealed inbetween the two base materials so as to form the information display panel.

An aluminum metallic electrode prepared on the stainless substrate is directly attached to the attaching/detaching mechanism of the drive circuit substrate so as to electrically connect to the drive circuit. Writing was performed to the information display panel with the display panel attached to the drive circuit substrate and information was displayed. Then, it was repeated to detach the display unit from the attaching/detaching mechanism of the drive circuit substrate and attach to the attaching/detaching mechanism and rewrite the display. As a result, it was confirmed that no failure was caused on the display even after a hundred times of this examination to pull out and insert the copper electrode and even a single disconnection was not caused in either vertical direction or horizontal direction at the electrode unit.

<Embodiment 15>

The connection FPC using ACF for connecting to the attaching/detaching mechanism of insert-and-remove method is connected to the panel of the display unit same as that in the embodiment 14. Polyimide plated with the copper electrode having a thickness of $3\mu m$ was used as the connection FPC serving as the connector. The copper electrode was inserted into and pulled out from the attaching/detaching mechanism of the insert-and-remove method to examine display rewrite. In the similar manner as the embodiment 11, it was repeated to remove the display unit by pulling the copper electrode out from the attaching/detaching mechanism of the drive circuit substrate and attach the display unit to the attaching/detaching mechanism by inserting the copper electrode into the attaching/detaching mechanism and rewrite. As a result, it was confirmed that no failure was caused on the display even after a hundred times of this examination to pull out and insert the copper electrode and even a single disconnection was not caused in either vertical direction or horizontal direction at the electrode unit.

<Embodiment 16>

The connection FPC using ACF for connecting to the attaching/detaching mechanism of insert-and-remove method is connected to the panel of the display unit same as that in the embodiment 14. Polyimide of the substrate laminated with the copper film having a thickness of $10\mu m$ and performed patterning was used as the connection FPC serving as the connector. The copper electrode was inserted into and pulled out from an attaching/detaching mechanism of the insert-and-remove method to examine display rewrite. In the similar manner as the embodiment 11, it was repeated to remove the display unit by pulling the copper electrode out from the attaching/detaching mechanism of the drive circuit substrate and attach the display unit to the attaching/detaching mechanism by inserting the copper electrode into the attaching/detaching mechanism and rewrite. As a result, it was confirmed that no failure was caused on the display even after a hundred times of this examination to pull out and insert the copper electrode and even a single disconnection was not caused in either vertical direction or horizontal direction at the electrode unit.

(B. Second characteristic of display unit constituting information display panel)

<Embodiment 21>

The panel of the display unit is produced having ITO, patterned on a substrate made of polyethylene terephthalate (PET), as the electrode. The transparent substrate having ITO film patterned in the stripe state was provided on the surface of the substrate made of polyethylene terephthalate (PET) with the thickness of 125$\mu$m. The partition walls of 50$\mu$m in height and 30$\mu$m in width are formed on the substrate and the charged particles as the display media are sealed in cells surrounded by the partition walls, onto which an electrode film having ITO film patterned in the stripe state was adhered, so as to produce the panel of the display unit. ITO electrode patterned on two substrate films facing at this point was adhered in a direction orthogonal to each other, so as to constitute to be able to display in a matrix state.
The connection FPC for connecting to the attaching/detaching mechanism of the drive circuit substrate is connected to the panel of the display unit in the A4 size having the constitution stated above by use of ACF. The copper electrode having a thickness of 3 $\mu$m plated on a polyimide film was used as the connection FPC serving as the connector. The connection FPC had wiring on only one side thereof. The copper electrode was attached to the attaching/detaching mechanism of the press-fit method to examine display rewrite. At each time of attaching and detaching, it was confirmed whether connection was succeeded or failed and performed defect assessment after display rewrite. As a result, connection was failed once in 50 times, and, after a failure, there was no problem with the display when removing remounting the panel. No display failure was observed even after 300 times of attaching and detaching.

<Embodiment 22>

The connection FPC for connecting to the attaching/detaching mechanism of insert-and-remove method of the drive circuit substrate was connected to the panel of the display unit same as that in the embodiment 21 by use of ACF. Polyimide plated with the copper electrode having a thickness of 3 $\mu$m was used as the connection FPC serving as the connector. The connection FPC had wiring on both sides thereof. Having a double-sided connection connector of the same size, it enabled to secure a dimension of the electrode of the connection unit twice the size of the dimension of the electrode with one-sided wiring.
The copper electrode was inserted into and pulled out from the attaching/detaching mechanism of the insert-and-remove method to examine display rewrite. At each time of inserting into and pulled out, it was confirmed whether connection was succeeded or failed and performed defect assessment after display rewrite.

As a result, connection was failed once in 50 times and, after a failure, there was no problem with the display when removing and reattaching the panel. No display failure was observed even after 300 times of attaching and detaching.

<Embodiment 23>

The connection FPC for connecting to the attaching/detaching mechanism of press-fit method was connected to the panel of the display unit same as that in the embodiment 21 by use of ACF at a longitudinal section. Polyimide plated with the copper electrode having a thickness of 3 $\mu$m was used as the connection FPC serving as the connector. The connection FPC had wiring on only one side thereof. The copper electrode was attached to and detached from the attaching/detaching mechanism of the press-fit method of the drive circuit substrate. In spite of a very long connection unit of 250 mm to the attaching/detaching mechanism of the press-fit method, there was no problem in attaching and detaching. As a result, connection was failed once in 50 times and, after a failure, there was no problem with the display when removing and reattaching the panel. No display failure was observed even after 300 times of attaching and detaching.

<Embodiment 24>

The connection FPC for connecting to the attaching/detaching mechanism of the insert-and-remove method was connected to the panel of the display unit same as that in the embodiment 21 by use of ACF at the longitudinal section. Polyimide plated with the copper electrode having a thickness of 3 $\mu$m was used as the connection FPC serving as the connector. The connection FPC had wiring on both sides thereof. By use of the connection unit in a size the same as that for one-side attaching, it was achieved to reduce an entire length of the connection unit to half. The copper electrode was inserted into and pulled out from the attaching/detaching mechanism of the insert-and-remove method of the drive circuit substrate. Since the connection unit for connecting to the attaching/detaching mechanism was reduced to 125mm, it enabled easy connection to the attaching/detaching mechanism and thereby achieved connection of the drive circuit substrate and the panel of the display unit in a dramatically short time.

<Embodiment 25>

A TFT-formed substrate was formed by making a wiring metallic electrode by forming an insulating film on a front surface of a stainless substrate having a thickness of 100 $\mu$m and performing aluminum spattering thereon and making amorphous silicon as a semiconductor layer by a CDV method. A substrate is prepared by forming ITO film on the front surface of polycarbonate resin (PC) having a thickness of 125 $\mu$m, and cholesteric liquid crystal having the memory property is sealed inbetween the two base materials, so as to form the panel of the display unit with TFT.

The connection FPC for connecting to the attaching/detaching mechanism of the drive circuit substrate is connected to the panel of the display unit in the A4 size having the constitution stated above by use of ACF. The connection FPC had wiring on only one side thereof. The copper electrode was attached to the attaching/detaching mechanism of the press-fit method to examine display rewrite. At each time of attaching and detaching, it was confirmed whether connection was succeeded or failed and performed defect assessment after display rewrite. As a result, connection was failed once in 50 times, and, after a failure, there was no problem with the display when removing remounting the panel. No display failure was observed even after 300 times of attaching and detaching.

<Embodiment 26>

The connection FPC for connecting to the attaching/detaching mechanism of insert-and-remove method of the drive circuit substrate was connected to the panel of the display unit same as that in the embodiment 25 by use of ACF. Polyimide plated with the copper electrode having a thickness of 3$\mu$m was used as the connection FPC serving as the connector. The connection FPC had wiring on both sides thereof. Having a double-sided connection connector of the same size, it enabled to secure a dimension of the electrode of the connection unit twice the size of the dimension of the electrode with one-sided wiring.

The copper electrode was inserted into and pulled out from the attaching/detaching mechanism of the insert-and-remove method to examine display rewrite. At each time of inserting into and pulled out, it was confirmed whether connection was succeeded or failed and performed defect assessment after display rewrite. As a result, connection was failed once in 50 times and, after a failure, there was no problem with the display when removing and reattaching the panel. No display failure was observed even after 300 times of attaching and detaching.

<Embodiment 27>

The connection FPC using ACF for connecting to the attaching/detaching mechanism of press-fit method was connected to the panel of the display unit same as that in the embodiment 25 by use of ACF at a longitudinal section. Polyimide plated with the copper electrode having a thickness of 3$\mu$m was used as the connection FPC serving as the connector. The connection FPC had wiring on only one side thereof. The copper electrode was attached to and detached from the attaching/detaching mechanism of the press-fit method of the drive circuit substrate. In spite of a very long connection unit of 250mm to the attaching/detaching mechanism of the press-fit method, there was no problem in attaching and detaching. As a result, connection was failed once in 50 times and, after a failure, there was no problem with the display when removing and reattaching the panel. No display failure was observed even after 300 times of attaching and detaching.

<Embodiment 28>

The connection FPC using ACF for connecting to the attaching/detaching mechanism of the insert-and-remove method was connected to the panel of the display unit same as that in the embodiment 27 by use of ACF at the longitudinal section. Polyimide plated with the copper electrode having a thickness of 3$\mu$m was used as the connection FPC serving as the connector. The connection FPC had wiring on both sides thereof. By use of the connection unit in a size the same as that for one-side attaching, it was achieved to reduce an entire length of the connection unit to half. The copper electrode was inserted into and pulled out from the attaching/detaching mechanism of the insert-and-remove method of the drive circuit substrate. Since the connection unit for connecting to the attaching/detaching mechanism of the insert-and-remove method was reduced to 125mm, it enabled easy connection to the attaching/detaching mechanism of the insert-and-remove method and thereby achieved connection of the drive circuit substrate and the panel of the display unit in a dramatically short time.

The followings are embodiments with regard to a thickness of the connector of the panel of the display unit and a thickness of the connection electrode to be disposed on the connector.

<Embodiment 31>

The panel of the display unit is produced having ITO, patterned on the substrate made of polyethylene terephthalate (PET), as the electrode. The transparent substrate having ITO film patterned in the stripe state was provided on the surface of the substrate made of polyethylene terephthalate (PET) with the thickness of 125$\mu$m. The partition walls of 50$\mu$m in height and 30$\mu$m in width are formed on the substrate and the charged particles as the display media are sealed in cells surrounded by the partition walls, onto which the electrode film having ITO film patterned in the stripe state was adhered, so as to produce the panel of the display unit. ITO electrode patterned on two substrate films facing at this point was adhered in the direction orthogonal to each other, so as to constitute to be able to display in the matrix state.

The connection FPC for connecting to the attaching/detaching mechanism of the drive circuit substrate is connected to the panel of the display unit in the A4 size having the constitution stated above by use of ACF. The copper electrode having a thickness of 10 nm plated on a polyimide film having a thickness of 0.07 mm was used as the connection FPC serving as the connector. As the connection FPC (connector) serving as the connector of the panel of the display unit, the copper electrode had wiring on only one side thereof. The connector with the copper electrode was attached to the attaching/detaching mechanism of the press-fit method to examine display rewrite. At each time of attaching and detaching, it was confirmed whether connection was succeeded or failed and performed defect assessment after display rewrite. As a result, connection was failed once in 50 times, and, after a failure, there was no problem with the display when removing remounting the panel. No display failure was observed even after 300 times of attaching and detaching.

<Embodiment 32>

The panel of the display unit is produced having ITO, patterned on the substrate made of polyethylene terephthalate (PET), as the electrode. The transparent substrate having ITO film patterned in the stripe state was provided on the surface of the substrate made of polyethylene terephthalate (PET) with the thickness of 125$\mu$m. The partition walls of 50$\mu$m in height and 30$\mu$m in width are formed on the substrate and the charged particles as the display media are sealed in cells surrounded by the partition walls, onto which the electrode film having ITO film patterned in the stripe state was adhered, so as to produce the panel of the display unit. ITO electrode patterned on two substrate films facing at this point was adhered in the direction orthogonal to each other, so as to constitute to be able to display in the matrix state.

The connection FPC for connecting to the attaching/detaching mechanism of the drive circuit substrate is connected to the panel of the display unit in the A4 size having the constitution stated above by use of ACF. The copper electrode having the thickness of 10 nm plated on the polyimide film having the thickness of 0.07 mm was used as the connection FPC serving as the connector. As the connection FPC (connector) serving as the connector of the panel of the display unit, the copper electrode had wiring on only one side thereof. The connector with the copper electrode was attached to the attaching/detaching mechanism of the press-fit method to examine display rewrite. At each time of attaching and detaching, it was confirmed whether connection was succeeded or failed and performed defect assessment after display rewrite. As a result, connection was failed once in 50 times, and, after a failure, there was no problem with the display when removing remounting the panel. No display failure was observed even after 300 times of attaching and detaching.

<Embodiment 33>

The panel of the display unit is produced having ITO, patterned on the substrate made of polyethylene terephthalate (PET), as the electrode. The transparent substrate having ITO film patterned in the stripe state was provided on the surface of the substrate made of polyethylene terephthalate (PET) with the thickness of 125 $\mu$m. The partition walls of 50 $\mu$m in height and 30 $\mu$m in width are formed on the substrate and the charged particles as the display media are sealed in cells surrounded by the partition walls, onto which the electrode film having ITO film patterned in the stripe state was adhered, so as to produce the panel of the display unit. ITO electrode patterned on two substrate films facing at this point was adhered in the direction orthogonal to each other, so as to constitute to be able to display in the matrix state.

The connection FPC for connecting to the attaching/detaching mechanism of the drive circuit substrate is connected to the panel of the display unit in the A4 size having the constitution stated above by use of ACF. The copper electrode having the thickness of 10nm plated on the polyimide film having the thickness of 0.05 mm was used as the connection FPC serving as the connector. As the connection FPC (connector) serving as the connector of the panel of the display unit, the copper electrode had wiring on only one side thereof. It was hard to attach the connector with the copper electrode to the attaching/detaching mechanism of the press-fit method of the drive circuit substrate.

<Embodiment 34>

The panel of the display unit is produced having ITO, patterned on the substrate made of polyethylene terephthalate (PET), as the electrode. The transparent substrate having ITO film patterned in the stripe state was provided on the surface of the substrate made of polyethylene terephthalate (PET) with the thickness of 125 $\mu$m. The partition walls of 50 $\mu$m in height and 30 $\mu$m in width are formed on the substrate and the charged particles as the display media are sealed in cells surrounded by the partition walls, onto which the electrode film having ITO film patterned in the stripe state was adhered, so as to produce the panel of the display unit. ITO electrode patterned on two substrate films facing at this point was adhered in the direction orthogonal to each other, so as to constitute to be able to display in the matrix state.

The connection FPC for connecting to the attaching/detaching mechanism of the insert-and-remove method of the drive circuit substrate is connected to the panel of the display unit in the A4 size having the constitution stated above by use of ACF. The copper electrode having a thickness of 6nm was disposed on a polyimide film having a thickness of 0.1 mm was used as the connection FPC serving as the connector. The connector, having wiring on only one side thereof, was inserted into and pulled out from the attaching/detaching mechanism of the insert-and-remove method of the drive circuit substrate, so as to examine display rewrite. At each time of attaching and detaching, it was confirmed whether connection was succeeded or failed and performed defect assessment after display rewrite. As a result, connection was failed once in 10 times.

INDUSTRIAL APPLICABILITY

The information display panel according to the present invention is preferably applicable to the display unit for mobile equipment such as notebook personal computers, electric diary, PDAs (Personal Digital Assistants), cellular phones, handy terminals and so on; to the electric paper such as electric books, electric newspapers, electric manual (instruction) and so on; to the bulletin boards such as signboards, posters, blackboards, whiteboards and so on; to the image display unit for electric calculator, home electric application products, auto supplies and so on; to the card display unit such as point cards, IC cards and so on; and to the display unit for electric advertisements, information boards, electric POPs (Point Of Presence, Point Of Purchase advertising), electric price tags, electric shelf tags, electric musical score, RF-ID device and so on. In addition, the information display panel is preferably applicable to the display unit for electric equipments such as POS terminals, car navigation system, clock and so on.

The information display panel according to the present invention, adopting a portable display unit thereof which can be removed from the drive circuit substrate to move to elsewhere particularly to usages stated above, can provide the portable display unit which is attached to the drive circuit substrate for rewrite and detached from the drive circuit substrate after rewrite to be carried around while displaying newly-written information. It is to be noted that the information display panel according to the present invention may have a display unit of a simple matrix driving type which does not use switching elements for the panel itself of the display unit, a display unit of a static driving type, a display unit of segment driving type, or a display unit of active matrix driving type using TGT switching elements.

**Claims**

1.  Information display panel comprising a display unit (44) having a display memory property and a drive circuit substrate (43), said panel being arranged to rewrite and display information such as an image by electrically connecting the display unit to the drive circuit substrate, wherein the display unit is constituted to have line electrodes disposed in a display area, extraction electrodes extending each line electrode to an end of the display unit, which represents an extraction electrode unit, and a connector (46) electrically connected to the line electrodes, said connector being attachable to and detachable from an attaching/detaching mechanism (42) provided on the drive circuit substrate, wherein connector, if attached to the attaching/detaching mechanism is electrically connected to a drive circuit provided on the drive circuit substrate,

    **characterised in that** the connector of the display unit comprises a connection substrate (61), having connection electrodes (62) which are on one end of the connection substrate electrically to the end of the display unit having the extraction electrode unit, so as to provide an electrical continuity between the extraction electrodes and corresponding onnection electrodes and which extend tocoards the opposite end of the connection substrate to

    a connection terminal unit (63-1, 63-2, 63-3, 82) which is arranged to be attached and electrically conneted to the attaching/detaching mechanism of the drive circuit substrate, wherein the connection electrodes are disposed on both main surfaces of the connection substrate at the connection terminal unit so as to constitute a double-sided attach constitution.

2.  The information display panel according to claim 1, wherein the connector is provided at the periphery of the display unit, and the attaching/detaching mechanism is a support and connect member of a press-fit type for electrically connecting and supporting between the connector and a drive circuit terminal disposed on the drive circuit substrate and comprised of the support and connect member for mechanically press-fitting the connector to the drive circuit terminal when the display unit is attached, while releasing the connector from the drive circuit terminal when the display unit is detached.

3.  The information display panel according to claim 1, wherein the connector is provided at the periphery of the display unit, and the attaching/detaching mechanism is a support and connect member of an insert-and-remove type for electrically connecting and supporting between the connector and a drive circuit terminal disposed on the drive circuit substrate and comprised of the support and connect member for mechanically inserting the connector into the drive circuit terminal when the display unit is attached, while pulling the connector out to release from the drive circuit terminal when the display unit is detached.

4.  The information display panel according to one of claims 1 to 3, wherein an actuation driver (41) is mounted on the display unit.

5.  The information display panel according to one of claims 1 to 3, wherein an actuation driver (41) is mounted on the drive circuit substrate.

6. The information display panel according to one of claims 1 to 5, wherein the connector, provided at the periphery of the display unit and attached to the attaching/detaching mechanism of the drive circuit substrate, has a thickness between 0.07 mm and 1.0 mm.

7. The information display panel according to one of claims 1 to 6, wherein the connector is provided at the periphery of the display unit, and the connection electrodes (62) have a thickness between 10 nm and 50 $\mu$m.

8. The information display panel according to any preceding claim, wherein the connection electrodes at the connection terminal unit of the double-sided attach constitution have an electrode area double the size of that of a single-sided attach constitution having the same connection terminal unit size.

9. The information display panel according to any one of claims 1 to 7, wherein the connection electrodes at the connection terminal unit of the double-sided attach constitution have an electrode area of the same size as that of the single-sided attach constitution, whereas the connection terminal unit is half the size of that of the single-sided attach constitution.

10. The information display panel according to any preceding claim, wherein an anisotropically conductive film (71) is disposed between the end of the display unit having the extraction electrode unit and the connection electrode provided on the connection substrate, so as to connect the end of the display unit having the extraction electrode unit and the connection electrode as well as to obtain the electrical continuity between the extraction electrodes and the connection electrodes.

11. The information display panel according to any preceding claim, wherein the connection substrate is a polyimide resin substrate or a glass fiber reinforced epoxy resin substrate.

12. The information display panel according to any preceding claim, wherein the connection electrodes are metallic electrodes.

13. The information display panel according to claim 12, wherein the metallic electrdes are formed of copper plating film or copper foil.

14. The information display panel according to one of claims 1 to 13, wherein the display unit is constituted of two substrates, at least one of which is transparent, and a display medium sealed in a space therebetween, and is arranged to display information such as an image in the display area by electrically controlling and activating the display medium.

15. The information display panel according to one of claims 1 to 14, wherein the display medium has a display memory property and is constituted of a particle assemblage containing particles having at least optical reflectance and electrification characteristic.

**Patentansprüche**

1. Informationsanzeigetafel, umfassend eine Anzeigeeinheit (44) mit einer Anzeigespeichereigenschaft und ein Ansteuerungsschaltungssubstrat (43), wobei die Tafel dafür eingerichtet ist, Information wie etwa ein Bild zu überschreiben und anzuzeigen, indem die Anzeigeeinheit mit dem Ansteuerungsschaltungssubstrat elektrisch verbunden wird, worin die Anzeigeeinheit so aufgebaut ist, dass sie in einem Anzeigebereich angeordnete Linienelektroden, Extraktionselektroden, die jede Linienelektrode zu einem Ende der Anzeigeeinheit verlängern, das eine Extraktionselektrodeneinheit darstellt, und einen mit den Linienelektroden elektrisch verbundenen Verbinder (46) hat, wobei der Verbinder an einem auf dem Ansteuerungsschaltungssubstrat ausgebildeten Anbring/Abnehm-Mechanismus (42) anbringbar und davon abnehmbar ist, worin der Verbinder, wenn er am Anbring/Abnehm-Mechanismus angebracht wird, mit einer auf dem Ansteuerungsschaltungssubstrat ausgebildeten Ansteuerungsschaltung elektrisch verbunden ist;

    **dadurch gekennzeichnet, dass** der Verbinder der Anzeigeeinheit ein Verbindungssubstrat (61) umfasst, das Verbindungselektroden (62) hat, die an einem Ende des Verbindungssubstrats elektrisch mit dem Ende der Anzeigeeinheit mit der Extraktionselektrodeneinheit verbunden sind, um dadurch einen elektrischen Durchgang zwischen den Extraktionselektroden und entsprechenden Verbindungselektroden bereitzustellen, und die sich zum gegenüberliegenden Ende des Verbindungssubstrats zu einer Verbindungsanschlusseinheit (63-1, 63-2, 63-3, 82) erstrecken, die dafür eingerichtet ist, am Anbring/Abnehm-Mechanismus des Ansteuerungsschaltungssubstrats angebracht und elektrisch mit ihm verbunden zu werden, worin die Verbindungselektroden auf beiden Hauptflächen des Verbindungssubstrats an der Verbindungsanschlusseinheit angeordnet sind, um dadurch eine doppelseitige Anbringungsstruktur zu bilden.

2. Informationsanzeigetafel nach Anspruch 1, worin der Verbinder am Umfang der Anzeigeeinheit ausgebildet ist und der Anbring/Abnehm-Mechanismus ein Trage- und Verbindeteil eines Presspassungstyps zum Tragen und elektrischen Verbinden zwischen dem Verbinder und einem auf dem Ansteuerungsschaltungssubstrat angeordneten Ansteuerungsschaltungsanschluss ist und aus dem Trage- und Verbindeteil besteht, und zwar zum mechanischen Aufpressen des Verbinders auf den Ansteuerungsschaltungsanschluss, wenn die Anzeigeeinheit angebracht wird, während der Verbinder vom Ansteuerungsschaltungsanschluss gelöst wird, wenn die Anzeigeeinheit abgenommen wird.

3. Informationsanzeigetafel nach Anspruch 1, worin der Verbinder am Umfang der Anzeigeeinheit ausgebildet ist und der Anbring/Abnehm-Mechanismus ein Trage- und Verbindeteil nach einem Einsetzen-und-Herausnehmen-Verfahren zum Tragen und elektrischen Verbinden zwischen dem Verbinder und einem auf dem Ansteuerungsschaltungssubstrat angeordneten Ansteuerungsschaltungsanschluss ist und aus dem Trage- und Verbindeteil besteht, und zwar zum mechanischen Einsetzen des Verbinders in den Ansteuerungsschaltungsanschluss, wenn die Anzeigeeinheit angebracht wird, während der Verbinder herausgezogen wird, um ihn vom Ansteuerungsschaltungsanschluss zu lösen, wenn die Anzeigeeinheit abgenommen wird.

4. Informationsanzeigetafel nach einem der Ansprüche 1 bis 3, worin ein Betätigungsmitnehmer (41) auf der Anzeigeeinheit montiert ist.

5. Informationsanzeigetafel nach einem der Ansprüche 1 bis 3, worin ein Betätigungsmitnehmer (41) auf dem Ansteuerungsschaltungssubstrat montiert ist.

6. Informationsanzeigetafel nach einem der Ansprüche 1 bis 5, worin der Verbinder, der am Umfang der Anzeigeeinheit ausgebildet und am Anbring/Abnehm-Mechanismus des Ansteuerungsschaltungssubstrats angebracht ist, eine Dicke zwischen 0,07 und 1,0 mm hat.

7. Informationsanzeigetafel nach einem der Ansprüche 1 bis 6, worin der Verbinder am Umfang der Anzeigeeinheit ausgebildet ist und die Verbindungselektroden (62) eine Dicke zwischen 10 nm und 50 $\mu$m haben.

8. Informationsanzeigetafel nach einem der vorhergehenden Ansprüche, worin die Verbindungselektroden an der Verbindungsanschlusseinheit der doppelseitigen Anbringungsstruktur eine Elektrodenfläche von der doppelten Größe wie jene einer einseitigen Anbringungsstruktur mit der gleichen Größe der Verbindungsanschlusseinheit haben.

9. Informationsanzeigetafel nach einem der Ansprüche 1 bis 7, worin die Verbindungselektroden an der Verbindungsanschlusseinheit der doppelseitigen Anbringungsstruktur eine Elektrodenfläche von der gleichen Größe wie jene einer einseitigen Anbringungsstruktur haben, während die Verbindungsanschlusseinheit die halbe Größe wie jene der einseitigen Anbringungsstruktur hat.

10. Informationsanzeigetafel nach einem der vorhergehenden Ansprüche, worin eine anisotrop leitende dünne Schicht (71) zwischen dem Ende der Anzeigeeinheit mit der Extraktionselektrodeneinheit und den auf dem Verbindungssubstrat ausgebildeten Verbindungselektroden angeordnet ist, um dadurch das Ende der Anzeigeeinheit mit der Extraktionselektrodeneinheit und die Verbindungselektrode zu verbinden sowie den elektrischen Durchgang zwischen den Extraktionselektroden und den Verbindungselektroden zu erhalten.

11. Informationsanzeigetafel nach einem der vorhergehenden Ansprüche, worin das Verbindungssubstrat ein Polyimidharzsubstrat oder ein Substrat aus glasfaserverstärktem Epoxidharz ist.

12. Informationsanzeigetafel nach einem der vorhergehenden Ansprüche, worin die Verbindungselektroden metallische Elektroden sind.

13. Informationsanzeigetafel nach Anspruch 12, worin die metallischen Elektroden aus einer Kupferplattierungsschicht oder Kupferfolie gebildet werden.

14. Informationsanzeigetafel nach einem der Ansprüche 1 bis 13, worin die Anzeigeeinheit aus zwei Substraten, von denen mindestens eines transparent ist, und einem Anzeigemedium, das in einem Raum dazwischen eingekapselt ist, besteht, und dafür eingerichtet ist, Information wie etwa ein Bild durch elektrisches Steuern und Aktivieren des Anzeigemediums im Anzeigebereich anzuzeigen.

15. Informationsanzeigetafel nach einem der Ansprüche 1 bis 14, worin das Anzeigemedium eine Anzeigespeichereigenschaft hat und aus einer Partikelansammlung besteht, die Partikel enthält, die mindestens optische Reflexion und ein elektrisches Aufladungsmerkmal haben.

**Revendications**

1. Panneau d'affichage d'informations comprenant une unité d'affichage (44) ayant une propriété de mémoire d'affichage et un substrat de circuit de commande (43), ledit panneau étant agencé pour réécrire et afficher des informations telles qu'une image en connectant électriquement l'unité d'affichage au substrat de circuit de commande, dans lequel l'unité d'affichage est constituée pour avoir des électrodes de ligne disposées dans une zone d'affichage, des électrodes d'extraction étendant chaque électrode de ligne vers une extrémité de l'unité d'affichage, qui représente une unité d'électrodes d'extraction, et un connecteur (46) connecté électriquement aux électrodes de ligne, ledit connecteur pouvant être attaché à et détaché d'un mécanisme d'attachement/détachement (42) prévu sur le substrat de circuit de commande, dans lequel le connecteur, s'il est attaché au mécanisme d'attachement/détachement, est connecté électriquement à un circuit de commande prévu sur le substrat de circuit de commande, **caractérisé en ce que** le connecteur de l'unité d'affichage comprend un substrat de connexion (61), comportant des électrodes de connexion (62) qui sont connectées électriquement sur une extrémité du substrat de connexion à l'extrémité de l'unité d'affichage comportant l'unité d'électrodes d'extraction, de manière à réaliser une continuité électrique entre les électrodes d'extraction et les électrodes de connexion correspondantes, et qui s'étendent vers l'extrémité opposée du substrat de connexion vers une unité de bornes de connexion (63-1, 63-2, 63-3, 82) qui est agencée pour être attachée et connectée électriquement au mécanisme d'attachement/détachement du substrat de circuit de commande, dans lequel les électrodes de connexion sont disposées sur les deux surfaces principales du substrat de connexion au niveau de l'unité de bornes de connexion de manière à constituer une constitution d'attachement double face.

2. Panneau d'affichage d'informations selon la revendication 1, dans lequel le connecteur est prévu au niveau de la périphérie de l'unité d'affichage, et le mécanisme d'attachement/détachement est un élément de support et de connexion d'un type à assemblage par pression pour réaliser une connexion électrique et un support entre le connecteur et une borne de circuit de commande disposée sur le substrat de circuit de commande et composé de l'élément de support et de connexion pour assembler par pression mécaniquement le connecteur à la borne de circuit de commande lorsque l'unité d'affichage est attachée, tandis que le connecteur est libéré de la borne de circuit de commande lorsque l'unité d'affichage est détachée.

3. Panneau d'affichage d'informations selon la revendication 1, dans lequel le connecteur est prévu au niveau de la périphérie de l'unité d'affichage, et le mécanisme d'attachement/détachement est un élément de support et de connexion d'un type à insertion et retrait pour réaliser une connexion électrique et un support entre le connecteur et une borne de circuit de commande disposée sur le substrat de circuit de commande et composé de l'élément de support et de connexion pour insérer mécaniquement le connecteur dans la borne de circuit de commande lorsque l'unité d'affichage est attachée, tandis que le connecteur est sorti pour le libérer de la borne de circuit de commande lorsque l'unité d'affichage est détachée.

4. Panneau d'affichage d'informations selon l'une des revendications 1 à 3, dans lequel un dispositif de commande d'actionnement (41) est monté sur l'unité d'affichage.

5. Panneau d'affichage d'informations selon l'une des revendications 1 à 3, dans lequel un dispositif de commande d'actionnement (41) est monté sur le substrat de circuit de commande.

6. Panneau d'affichage d'informations selon l'une des revendications 1 à 5, dans lequel le connecteur, prévu au niveau de la périphérie de l'unité d'affichage et attaché au mécanisme d'attachement/détachement du substrat de circuit de commande, a une épaisseur entre 0,07 mm et 1,0 mm.

7. Panneau d'affichage d'informations selon l'une des revendications 1 à 6, dans lequel le connecteur est prévu au niveau de la périphérie de l'unité d'affichage et les électrodes de connexion (62) ont une épaisseur entre 10 nm et 50 $\mu$m.

8. Panneau d'affichage d'informations selon l'une quelconque des revendications précédentes, dans lequel les électrodes de connexion au niveau de l'unité de bornes de connexion de la constitution d'attachement double face ont une aire d'électrode dont la taille est le double de celle d'une constitution d'attachement simple face ayant la même taille d'unité de bornes de connexion.

9. Panneau d'affichage d'informations selon l'une quelconque des revendications 1 à 7, dans lequel les électrodes de connexion au niveau de l'unité de bornes de connexion de la constitution d'attachement double face ont une aire d'électrode de la même taille que celle de la constitution d'attachement simple face, tandis que la taille de l'unité de bornes de connexion est égale à la moitié de celle de la constitution d'attachement simple face.

10. Panneau d'affichage d'informations selon l'une quelconque des revendications précédentes, dans lequel un film conducteur anisotrope (71) est disposé entre l'extrémité de l'unité d'affichage ayant l'unité d'électrodes d'extraction et les électrodes de connexion prévues sur le substrat de connexion, de manière à connecter l'extrémité de l'unité d'affichage ayant l'unité d'électrodes d'extraction et l'électrode de connexion ainsi qu'à obtenir la continuité électrique entre les électrodes d'extraction et les électrodes de connexion.

**11.** Panneau d'affichage d'informations selon l'une quelconque des revendications précédentes, dans lequel le substrat de connexion est un substrat en résine polyimide ou un substrat en résine époxy renforcée par fibres de verre.

**12.** Panneau d'affichage d'informations selon l'une quelconque des revendications précédentes, dans lequel les électrodes de connexion sont des électrodes métalliques.

**13.** Panneau d'affichage d'informations selon la revendication 12, dans lequel les électrodes métalliques sont constituées d'un film recouvert de cuivre ou d'une feuille de cuivre.

**14.** Panneau d'affichage d'informations selon l'une des revendications 1 à 13, dans lequel l'unité d'affichage est constituée de deux substrats, au moins l'un d'entre eux étant transparent, et d'un milieu d'affichage enfermé hermétiquement dans un espace entre eux, et est agencée pour afficher des informations telles qu'une image dans la zone d'affichage en commandant et en activant électriquement le milieu d'affichage.

**15.** Panneau d'affichage d'informations selon l'une des revendications 1 à 14, dans lequel le milieu d'affichage a une propriété de mémoire d'affichage et est constitué d'un assemblage de particules contenant des particules ayant au moins une réflectance optique et une caractéristique d'électrification.

# FIG. 1

(a)

(b)

# FIG. 2

(a)

(b)

# FIG. 3

(a)

(b)

# FIG. 4

(a)

WHITE COLOR DISPLAY

2

3Wa

}3W

4  5    6    1

BLACK COLOR DISPLAY

(b)

2

3W

4  5    6    1

## FIG. 5

## FIG. 6

## FIG. 7

**(a)**

CHARACTERISTIC
REFLECTION :
LIGHT STATE

32

MACROMOLECULAR NETWORK

ABSORBER LAYER

31

LOW_VOLTAGE PULSE

**(b)**

TRANSMISSION, ABSORPTION :
DARK STATE

32

31

HIGH_VOLTAGE
PULSE

**(c)**

32

ABSORBER LAYER

31

EP 2 163 944 B1

# FIG. 8

# FIG. 9

(a)

(b) AT DETACHMENT/ATTACHMENT

(c) AT CONNECTION

# FIG. 10

(a)

(b) AT DETACHMENT/ATTACHMENT

(c) AT CONNECTION

# FIG. 11

(a)

(b)

# FIG. 12

(a)

(c)

(b)

A-A CROSS SECTION

# FIG. 13

(a)

81-1  81-2  81-3  81-4  81-5  81-6

71

83-2

83-4

83-6

61

82

(b)

81-1      81-3      81-5

61                                    82

81-2      81-4      81-6

(c)

71    81-1

83-2          81-2

81-3

81-4

81-5

81-6

81-2

83-4

81-4

83-6

82  81-6        61

# FIG. 14

(a)

81-1  81-2  81-3  81-4  81-5  81-6

71

83-2

83-6

61

83-4

82

(b)

81-1  81-3  81-5

61                                    82

81-2  81-4  81-6

(c)

83-2   71   81-1
              81-2
                   81-3
                        81-4
                             81-5
                                  81-6

81-2
81-4
81-6                              83-6
                                  61
              83-4

# FIG. 15

SQUARE CELL GRID ARRANGEMENT

SQUARE CELL HONEYCOMB
ARRANGEMENT 1

CIRCULAR CELL GRID ARRANGEMENT

LINE-STATE CELL

HEXAGONAL CELL HONEYCOMB
ARRANGEMENT

TRIANGLE CELL GRID ARRANGEMENT

CIRCULAR CELL HONEYCOMB
ARRANGEMENT

TRIANGLE CELL HONEYCOMB
ARRANGEMENT

SQUARE CELL NET-LIKE
ARRANGEMENT

SQUARE CELL HONEYCOMB
ARRANGEMENT 2

EP 2 163 944 B1

# FIG. 16

(a)

(b)

# FIG. 17

(a)

43

A

44

41

42

(b)

43

41

42

# FIG. 18

(a)

(b)

# FIG. 19

(a)

43

44

A

TCP

46

41

ATTACHING

43

44

A

46

42

41

(b)

43

42

## FIG. 20

103

104

102

A

TCP

101

## FIG. 21

103

104

102

A

103

FPC

**EP 2 163 944 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005062112 A
- US 6628257 B
- US 2005122306 A
- US 6601947 B
- US 2002145697 A
- US 6118081 A